# EUROPÄISCHE PATENTSCHRIFT

(11) **EP 3 976 423 B1**
(45) Veröffentlichungstag und Bekanntmachung des Hinweises auf die Patenterteilung: **22.01.2025**
(21) Anmeldenummer: 20729968.6
(22) Anmeldetag: 25.05.2020
(51) Int. Cl.: B60R 13/02, B60Q 3/14, B32B 27/00

(54) **HINTERLEUCHTBARES BAUTEIL**
BACKLIT COMPONENT
COMPOSANT POUVANT ÊTRE RÉTRO-ÉCLAIRÉ

(30) Priorität: 29.05.2019 EP 19177379
(43) Veröffentlichungstag der Anmeldung: 06.04.2022
(73) Patentinhaber: WEIDPLAS GmbH, 8630 Rüti (CH)
(72) Erfinder: RUDOLF, René, 08412 Werdau (DE); BEFELEIN, Carsten, 85540 Haar (DE); LAMBERT, Sven, 8630 Rüti (CH); KINDL, Christoph, 66386 St. Ingbert (DE); QUIRING, Johannes, 59505 Bad Sassendorf (DE); FRIJTERS, Jan-Eric, 8843 Oberiberg (CH); MADRID FERNANDEZ, Paula, 8853 Lachen (CH)
(74) Vertreter: Rutz, Andrea
(86) Internationale Anmeldenummer: PCT/EP2020/064433
(87) Internationale Veröffentlichungsnummer: WO 2020/239688

(56) Entgegenhaltungen:
- WO-A1-2016/193384
- DE-A1- 102015 120 876
- DE-A1- 19 949 964
- FR-A1- 2 911 555
- US-A- 2 886 911
- US-B1- 6 454 422

## Beschreibung

### TECHNISCHES GEBIET

Die vorliegende Erfindung betrifft ein hinterleuchtbares Bauteil, bevorzugt für ein Fahrzeug, insbesondere bevorzugt für ein Kraftfahrzeug, sowie ein Verfahren zur Herstellung eines solchen Bauteils.

### STAND DER TECHNIK

Bei Kraftfahrzeugen, aber auch bei anderen Fahrzeugen, ist es bekannt, im Innen- oder Aussenraum Anzeige- und Ausleuchtelemente vorzusehen, um zum Beispiel den Fahrgastraum auszuleuchten oder um die Wahrnehmung der Insassen, aber auch von anderen Personen, zu lenken. So werden oft hinterleuchtbare Dekorelemente und Zierleisten verwendet, um zum Beispiel in Form einer Türeinstiegsleiste auf den Markennamen des Kraftfahrzeugs hinzuweisen, oder um einen speziellen Effekt zu bewirken und dabei die Wahrnehmung des Betrachters auf sich zu ziehen. Auch Bedien- und Betätigungselemente werden oft mit Anzeige- und Ausleuchtelementen versehen, die via einen Lichtleiter von einer dahinter angeordneten Lichtquelle beleuchtet werden, um die Erkennbarkeit der einzelnen Bedien- und Betätigungselemente insbesondere auch bei Nacht zu gewährleisten.

Beispielsweise offenbart die DE 102015120876 A1 ein gattungsgemässes hinterleuchtbares Bauteil, welches eine Tragschicht sowie eine daran angebrachte Lackschicht aufweist. An der Vorderseite der Lackschicht sind lichtstreuende Elemente vorgesehen, um das von einer Lichtquelle seitlich eingestrahlte Licht zur Sichtseite hin auszukoppeln.

Die WO 2016/193384 A1 offenbart ein Bauteil, bei welchem in der Herstellung eine Lackschicht im Spritzgussverfahren an eine transluzente Tragschicht angespritzt wird. Mittels eines an der Rückseite der Tragschicht angeordneten Leuchtelements kann die Lackschicht umstrahlt werden, um dadurch entsprechende optische Effekte zu erzielen.

Die WO 2019/020716 offenbart ein Zierteil für ein Fahrzeug, mit einer integrierten Leiterplatte, auf der elektronische Bauteile, wie zum Beispiel Lichtquellen angeordnet sind. Die Leiterplatte ist vollständig von einem thermoplastischen oder duroplastischen Material umgeben.

In der WO 2018/104045 A1 wird ein hinterleuchtbares Bauteil offenbart, bei welchem sich ein transparenter oder transluzenter Lack von der Vorderseite her durch Durchgangsöffnungen hindurch bis zur Rückseite eines Basiselements erstreckt. Das von einem rückseitig angeordneten Leuchtelement ausgestrahlte Licht gelangt innerhalb des Lackes durch die Durchgangsöffnungen hindurch zur Sichtseite.

Die WO 2017/121516 A1 offenbart die Anordnung eines Leuchtelements im Bereich einer als Lichtleiter ausgebildeten Schicht, durch welche hindurch das ausgestrahlte Licht zu einem an der Vorderseite angebrachten, mit Durchbrüchen versehenen oder lichtdurchlässig ausgebildeten Dekorelement geleitet wird. Der Lichtleiter kann Lichtumlenkstrukturen aufweisen, um die Lichtauskoppelung aus dem Lichtleiter zu verbessern.

Die WO 2011/140666 A1 offenbart ein Herstellungsverfahren für einen Behälter mit einem elektronischen Element, welches im Kunststoffmaterial des Behälters eingebettet ist.

Die EP 2 684 744 A1 offenbart eine Ausführungsform, bei der ein Leuchtelement in ein Trägerteil eines Kraftfahrzeug-Zierteils integriert ist. Das Trägerteil ist mit einer Deckschicht aus Polyurea oder Polyurethan bedeckt.

In der EP 2 322 962 A1 ist ein Dekorelement offenbart, bei dem Licht, das in einen Lichtleiter eingekoppelt wird, via einen Diffusor zu Durchbrüchen gelangt, welche in einem die Sichtseite bildenden Dekorelement ausgebildet sind.

Die DE 20 2017 105 880 U1 gibt ein Verkleidungsteil für den Fahrzeuginnenraum an, bei dem seitlich in eine Optikschicht eingestrahltes Licht an der Rückseite der Optikschicht im Bereich von Störstellen gestreut und dadurch an der Vorderseite ausgekoppelt wird.

In der DE 10 2017 203 888 A1 ist ein Fahrzeugbauteil angegeben, bei dem das Licht, welches von einem rückseitig angeordneten Leuchtelement ausgestrahlt wird, via eine oder mehrere Öffnungen durch ein Substrat hindurch zu einer transparenten Oberflächenschicht gelangt. Ein Diffusor kann vorgesehen sein, um das Licht zu streuen.

Die DE 10 2016 225 813 A1 offenbart ein Verfahren zur Herstellung eines durchleuchtbaren Kraftfahrzeuginnenraumelements. Das Kraftfahrzeuginnenraumelement weist einen Träger mit einer daran angebrachten durchleuchtbaren Einfärbung auf.

Die DE 10 2014 015 525 A1 offenbart ein Verkleidungselement für ein Kraftfahrzeug, bei dem Licht via einen Lichtleiter und eine Diffusorschicht durch einen in einer Dekorschicht ausgebildeten Durchbruch hindurch zum Betrachter gelangt.

Ferner offenbart die WO 2017/174548 A1 einen Lichtleiter, in dessen Inneren Lichtumlenkstrukturen angeordnet sind, die mittels eines Lasers hergestellt sind.

Die EP 2 853 806 A1 offenbart verschiedenartige Lichtumlenkstrukturen für Lichtleiter.

Weitere Bauteile von Fahrzeugen bzw. deren Herstellverfahren sind in den Dokumenten EP 1 666 225 A1, EP 2 743 005 B1, EP 1 705 152 A2 und EP 2 899 008 A1 offenbart. Die in diesen Dokumenten offenbarten Bauteile sind jedoch nicht hinterleuchtbar.

### DARSTELLUNG DER ERFINDUNG

Es ist eine Aufgabe der vorliegenden Erfindung, ein ästhetisch ansprechendes und einfach herstellbares hinterleuchtbares Bauteil anzugeben, welches die Wahrnehmung des Betrachters auf besonders effiziente Art und Weise auf sich zieht.

Zur Lösung dieser Aufgabe wird ein hinterleuchtbares Bauteil vorgeschlagen, wie es in Anspruch 1 angegeben ist. In Anspruch 13 ist ein Verfahren zur Herstellung eines derartigen Bauteils angegeben. Vorteilhafte Ausgestaltungen der Erfindung sind in den abhängigen Ansprüchen angegeben.

Die vorliegende Erfindung stellt also ein hinterleuchtbares Bauteil, bevorzugt für ein Fahrzeug, insbesondere bevorzugt für ein Kraftfahrzeug, zur Verfügung, aufweisend
eine Tragschicht;
eine an der Tragschicht angebrachte Lackschicht, welche wenigstens bereichsweise eine Sichtseite des Bauteils bildet;
zumindest ein Leuchtelement zum Hinterleuchten des Bauteils; sowie
eine oder mehrere Lichtumlenkstrukturen, welche im Bereich der Tragschicht angeordnet sind, um das vom zumindest einen Leuchtelement ausgestrahlte Licht zur Sichtseite hin umzulenken,
wobei die Lackschicht und die Tragschicht wenigstens bereichsweise transluzent oder transparent ausgebildet sind.

Die eine oder die mehreren Lichtumlenkstrukturen sind dazu ausgebildet, das vom zumindest einen Leuchtelement ausgestrahlte Licht gezielt in eine oder mehrere bestimmte Richtungen oder in einen oder mehrere bestimmte Richtungsbereiche umzulenken.

Dadurch, dass die von den Lichtumlenkstrukturen bewirkte Lichtumlenkung gezielt in eine oder mehrere bestimmte Richtungen oder in einen oder mehrere bestimmte Richtungsbereiche erfolgt, können vielfältige spezielle Effekte erzeugt werden, um die Aufmerksamkeit des Betrachters noch besser auf das Bauteil zu lenken. Darüber hinaus kann das vom Leuchtelement ausgestrahlte Licht auf besonders effiziente Art und Weise benutzt werden.

Durch das Vorsehen von Lichtumlenkstrukturen kann eine gezielte Lichtumlenkung des vom Leuchtelement ausgestrahlten Lichtes in eine oder mehrere bestimmte Richtungen oder in einen oder mehrere bestimmte Richtungsbereiche erreicht werden. Das Licht kann dadurch in eine oder mehrere einstellbare Richtungen oder in einen oder mehrere bestimmte Richtungsbereiche aus dem Bauteil ausgekoppelt werden. Je nach Ausrichtung und Lage der Lichtumlenkstrukturen kann die Lichtauskopplung aus dem Bauteil derart eingestellt werden, dass sie zum Beispiel fokussiert aus einem Lichtleiter in eine bestimmte Richtung oder diffus in einen räumlich klar begrenzten Richtungsbereich erfolgt. Auch können die Lichtstrahlen von einem bestimmten zusammenhängenden Bereich der Sichtseite des Bauteils aus zum Beispiel alle in im Wesentlichen parallele Richtungen ausgekoppelt werden. Die Lichtumlenkstrukturen erlauben zudem, dass ein besonders grosser Anteil des Lichtes, welches vom Leuchtelement ausgestrahlt wird, von der Aussenseite, insbesondere von der Sichtseite des Bauteils abgestrahlt werden kann. Dadurch kann das Bauteil insgesamt und bevorzugt zumindest die Sichtseite des Bauteils, optisch besonders gut wahrnehmbar ausgestaltet werden.

Das Bauteil ist hinterleuchtbar, das heisst, dass zumindest ein transluzent oder transparent ausgebildetes Element des Bauteils, vorzugsweise die Lackschicht und/oder die Tragschicht, von der Rückseite her mit Licht beleuchtet und dadurch aus Sicht des Betrachters erhellt wird.

Der Begriff "transparent" bezeichnet im Rahmen dieses Dokuments Materialien, wie beispielsweise Fensterglas, bei denen Dahinterliegendes relativ klar erkennbar ist, also Materialien, welche für Strahlung des für das menschliche Auge sichtbaren Spektrums weitgehend durchlässig sind. Mit anderen Worten können Lichtstrahlen weitgehend ungehindert durch ein transparentes Element hindurchtreten, das heisst von dessen Rückseite zu dessen Vorderseite gelangen. Transparente Materialien werden umgangssprachlich auch oft als durchsichtig bezeichnet. Demgegenüber bezeichnet der Begriff "transluzent" Materialien, die Licht nur teilweise durchlassen, bei denen die Anwesenheit von Dahinterliegendem für das menschliche Auge also zwar im Groben, das heisst insbesondere aufgrund von veränderten Helligkeitsverhältnissen, nicht jedoch in Details erkennbar ist. Transluzente Materialien sind somit lichtdurchlässig, aber undurchsichtig. Ein Beispiel für ein transluzentes Material ist Milchglas.

Nach einer Weiterbildung der Erfindung ist die Tragschicht und/oder Lackschicht wenigstens bereichsweise, bevorzugt vollständig, als Lichtleiter ausgebildet. Dies bietet den Vorteil, dass Licht innerhalb der Tragschicht und/oder der Lackschicht geführt, bevorzugt gerichtet geführt, werden kann, wobei bevorzugt keine wesentlichen Lichtverluste auftreten. Dem Fachmann sind Lichtleiter bekannt.

Eine besonders einfache Herstellung ergibt sich, wenn die bevorzugt formstabil ausgebildete Tragschicht aus Kunststoff hergestellt ist. Anstelle von Kunststoff kann zur Herstellung der Tragschicht aber auch Glas verwendet werden. Vorteilhaft ist die Tragschicht im Spritzgussverfahren hergestellt, wodurch sich eine einfache Herstellung des Bauteils in vielfältigen Formen ergibt. Die Tragschicht ist vorzugsweise als Ganzes einstückig herstellt.

Wenn die Tragschicht aus Kunststoff hergestellt ist, weist dieser bevorzugt wenigstens einen Thermoplasten und/oder wenigstens einen Duroplasten und/oder wenigstens ein Elastomer oder eine Mischung der genannten Substanzen auf.

Falls die Tragschicht wenigstens bereichsweise transluzent oder transparent ausgebildet ist, so ist der transluzente oder transparente Bereich bevorzugt aus Kunststoff hergestellt. Der Kunststoff weist bevorzugt wenigstens einen Thermoplasten und/oder wenigstens einen Duroplasten und/oder wenigstens ein Elastomer oder eine Mischung der genannten Substanzen auf. Falls die Tragschicht wenigstens bereichsweise transluzent oder transparent ausgebildet ist, so ist gemäss einer bevorzugten Ausführungsform der transluzente oder transparente Bereich der Tragschicht aus einem einzigen Thermoplasten, aus einem einzigen Duroplasten oder aus einem einzigen Elastomer hergestellt. Dies bietet den Vorteil, dass das Bauteil kostengünstig herstellbar ist und das Licht keine Materialgrenzflächen überwinden muss.

Falls der Kunststoff, welcher den transluzenten oder transparenten Bereich der Tragschicht bildet, einen Thermoplasten aufweist, so ist der Thermoplast beispielsweise Polycarbonat (PC), Polystyrol (PS), ein aromatischer Polyester, Polymethylmethacrylat (PMMA), Polyethylenterephthalat (PET), Polymethacrylmethylimid (PMMI), ein Cyclo-Olefin-Copolymer (COC), ein Cyclo-Olefin-Polymer (COP), ein Styrol-Acrylnitril-Copolymer (SAN) oder eine Mischung der genannten Polymere. Falls der Kunststoff, welcher den transluzenten oder transparenten Bereich der Tragschicht bildet, einen Duroplasten aufweist, so ist der Duroplast beispielsweise Polyurethan (PU) oder Polyurea (PUA). Falls der Kunststoff, welcher den transluzenten oder transparenten Bereich der Tragschicht bildet, ein Elastomer aufweist, so ist das Elastomer beispielsweise Silikon, insbesondere Silikonkautschuk. Dem Fachmann sind transluzente oder transparente Kunststoffe bekannt. Bei der Verwendung eines Elastomers und insbesondere von Silikon ergibt sich eine gute Anpassbarkeit des Bauteils zum Beispiel an eine Oberfläche eines Fahrzeugs. Polymethylmethacrylat (PMMA) hat sich als besonders gut im Hinblick auf die Bearbeitung mittels eines Lasers, insbesondere zur Herstellung von Lichtumlenkstrukturen, erwiesen. Polycarbonat (PC) kann ebenfalls mittels eines Lasers, insbesondere zur Herstellung von Lichtumlenkstrukturen, bearbeitet werden und haftet zudem gut an einem PUR-basierten Lack. Styrol-Acrylnitril-Copolymer (SAN) ist ebenfalls gut zur Bearbeitung mittels eines Lasers, insbesondere zur Herstellung von Lichtumlenkstrukturen, geeignet und haftet gut an Lack. Gemäss einer bevorzugten Ausführungsform ist die Tragschicht wenigstens bereichsweise, bevorzugt vollständig, aus Polycarbonat (PC) hergestellt und die Lackschicht wenigstens bereichsweise, bevorzugt vollständig, aus Polyurethan (PUR) und/oder aus Polyurea (PU) hergestellt. Diese Ausführungsform ist besonders geeignet für ein Bauteil, bei welchem die Tragschicht als Lichtleiter ausgebildet ist.

Nach einer Weiterbildung der Erfindung ist im Wesentlichen die gesamte Tragschicht, bevorzugt die gesamte Tragschicht, transluzent oder transparent ausgebildet. Falls im Wesentlichen die gesamte Tragschicht, bevorzugt die gesamte Tragschicht, transluzent oder transparent ausgebildet ist, so ist bevorzugt im Wesentlichen die gesamte Tragschicht, bevorzugt die gesamte Tragschicht, aus Kunststoff hergestellt. Die Tragschicht kann aus wenigstens zwei unterschiedlichen Kunststoffen hergestellt sein, welche optional eine unterschiedliche Lichtdurchlässigkeit aufweisen. Hierdurch können unterschiedliche Lichteffekte erzielt werden.

Nach einer Weiterbildung der Erfindung weist die Tragschicht wenigstens einen opaken Bereich auf. Im Falle mehrerer opaker Bereiche können diese voneinander vollständig getrennt vorliegen. Falls die Tragschicht einen opaken Bereich aufweist, so ist dieser opake Bereich bevorzugt aus einem Kunststoff hergestellt. Der Kunststoff weist bevorzugt wenigstens einen Thermoplasten und/oder wenigstens einen Duroplasten und/oder wenigstens ein Elastomer oder eine Mischung der genannten Substanzen auf. Der opake Bereich kann beispielsweise mittels eines Kunststoffs, wie beispielsweise Acrylnitril-Butadien-Styrol (ABS), Polypropylen (PP) oder Polyethylen (PE), hergestellt sein. Die opake Schicht kann beispielsweise auch aus Polycarbonat (PC) oder Polymethylmethacrylat (PMMA) hergestellt sein, welches mit Zusatzstoffen, wie beispielsweise mit Russ, opak gemacht ist. Dem Fachmann sind opake Kunststoffe bekannt.

Eine weitgehend verlustfreie und somit kostengünstige Herstellung der Lackschicht kann erreicht werden, wenn diese im Spritzgussverfahren ausgebildet wird. Vorteilhaft wird die Lackschicht dabei direkt an eine Oberfläche, insbesondere die Vorderseite, der Tragschicht angespritzt. Bevorzugt ist die Lackschicht wenigstens bereichsweise, bevorzugter vollflächig, auf der Vorderseite der Tragschicht angeordnet. Die Lackschicht ist bevorzugt als Ganzes einteilig ausgebildet. In gewissen Ausführungsformen kann die Lackschicht jedoch durchaus auch mehrteilig ausgebildet sein. Zum Beispiel können beabstandet voneinander angeordnete Teile der Lackschicht jeweils separate Bereiche der Tragschicht abdecken. Es ergeben sich dadurch vielfältige Gestaltungsmöglichkeiten. So können zum Beispiel die Teile der Lackschicht jeweils ein Symbol bilden, oder die von den Teilen der Lackschicht jeweils allein oder gemeinsam gebildeten Zwischenräume können eines oder mehrere Symbole bilden. Beim Material der Lackschicht handelt es sich bevorzugt um Polyurethan oder Polyurea. Nach einer Weiterbildung der Erfindung ist im Wesentlichen die gesamte Lackschicht, bevorzugt die gesamte Lackschicht, transluzent oder transparent ausgebildet. Nach einer Weiterbildung der Erfindung ist im Wesentlichen die gesamte Lackschicht, bevorzugt die gesamte Lackschicht, opak ausgebildet. Die opak ausgebildete Lackschicht weist optional wenigstens einen Durchbruch auf, durch welchen bevorzugt Licht hindurchtritt.

Vorteilhaft, um eine effiziente und somit kostengünstige Herstellung zu ermöglichen, werden die Tragschicht und die Lackschicht in aufeinanderfolgenden oder parallel laufenden Prozessen auf einer Spritzgussmaschine hergestellt. Die Spritzgussmaschine weist hierzu vorteilhaft eine Wendeplatte oder eine Verschiebplatte auf, um die Tragschicht nach ihrer erfolgten Herstellung zu drehen bzw. zu verschieben und in der gedrehten oder verschobenen Position mit einer anderen Formhälfte eine Kavität zur Erzeugung der Lackschicht zu bilden. Alternativ ist auch die Herstellung der Tragschicht und/oder der Lackschicht mittels Extrusion möglich. Falls die Tragschicht und/oder die Lackschicht mittels Extrusion hergestellt wird, so kann optional mittels Extrusion eine Schutzschicht auf die Lackschicht aufextrudiert werden, welche bevorzugt von der Lackschicht ablösbar ist. Selbstverständlich kann das Bauteil auch mittels Kombination von Spritzguss und Extrusion hergestellt werden.

Bevorzugt sind die Tragschicht und die Lackschicht jeweils vollständig transluzent oder transparent ausgebildet. In gewissen Ausführungsformen können die Tragschicht und/oder die Lackschicht jedoch auch nur bereichsweise transluzent oder transparent ausgebildet sein, das heisst, dass das vom Leuchtelement ausgestrahlte Licht nur in gewissen Bereichen der Tragschicht bzw. der Lackschicht durch diese hindurchdringen kann, während die anderen Bereiche opak ausgebildet sind. Vorteilhaft sind die transluzent oder transparent ausgebildeten Bereiche der Tragschicht und der Lackschicht jeweils unmittelbar angrenzend zueinander angeordnet, so dass das Licht auf gerader Linie durch die Tragschicht und die Lackschicht hindurchtreten kann und insbesondere vorteilhaft auf gerader Linie bis zum Betrachter gelangen kann.

Falls nur die Lackschicht oder nur die Tragschicht zumindest bereichsweise transluzent oder transparent ausgebildet ist, weist die entsprechend opak ausgebildete Tragschicht bzw. Lackschicht bevorzugt zumindest einen Durchbruch auf, welcher insbesondere unmittelbar angrenzend zu einem transluzent oder transparent ausgebildeten Bereich der Lackschicht bzw. der Tragschicht angeordnet ist. Das vom Leuchtelement ausgestrahlte Licht kann dann bevorzugt durch die zumindest bereichsweise transluzent oder transparent ausgebildete Lackschicht oder Tragschicht hindurch zum zumindest einen Durchbruch und durch diesen hindurch zum Betrachter gelangen.

Die Lackschicht dient nicht nur dazu, eine qualitativ hochwertige und ästhetisch ansprechende Sichtseite des Bauteils zu bilden, sondern schützt auch die Tragschicht sowie allfällige weitere Elemente des Bauteils vor Beschädigungen. Bevorzugt weist die Lackschicht deshalb eine grössere Härte als die Tragschicht auf und ist deshalb resistenter gegenüber mechanischen Einflüssen wie insbesondere Kratzern. Die Lackschicht kann die Tragschicht sowie allfällige weitere Elemente aber auch vor chemischen Einflüssen schützen. Insbesondere wenn die Tragschicht als Lichtleiter ausgebildet ist, kann aufgrund des Schutzes durch die Lackschicht eine ungehinderte Ausbreitung der Lichtstrahlen innerhalb der Tragschicht gewährleistet werden.

Das vom Leuchtelement ausgestrahlte Licht wird vorteilhaft derart von der einen oder den mehreren Lichtumlenkstrukturen umgelenkt, dass es, bevorzugt direkt, das heisst ohne weiteren Umlenkungen und/oder Reflexionen und/oder Streuungen, sowohl durch die Tragschicht als auch durch die Lackschicht hindurchtritt. Bevorzugt tritt das Licht dabei, insbesondere auf geradem Weg, zuerst durch die Tragschicht und dann durch die Lackschicht hindurch.

Es können ein einzelnes oder auch mehrere Leuchtelemente, d.h. Leuchtquellen, vorhanden sein. Vorzugsweise handelt es sich bei den Leuchtelementen um Leuchtdioden (LED's). Möglich ist beispielsweise aber auch eine Leuchtfolie, insbesondere eine Elektrolumineszenzfolie, oder OLED's, oder eine oder mehrere Glühbirnen. Bei nur einem einzigen Leuchtelement ist das Bauteil einfacher herstellbar, insbesondere auch was die Verkabelung angeht. Mittels mehrerer Leuchtelemente kann hingegen eine regelmässigere Ausleuchtung erzielt werden, oder aber die mehreren Leuchtelemente können gezielt für eine unregelmässige Ausleuchtung und dementsprechende Erzielung von besonderen optischen Effekten eingesetzt werden. Die Leuchtelemente sind bevorzugt rückseitig, innerhalb oder seitlich der Tragschicht angeordnet, so dass das von ihnen ausgestrahlte Licht direkt in die Tragschicht eingestrahlt werden kann, das heisst ohne durch ein anderes Element hindurchzutreten, davon reflektiert oder gestreut zu werden. Die Tragschicht dient vorteilhaft als Lichtleiter, um das vom einen oder den mehreren Leuchtelementen ausgestrahlte Licht zur Lackschicht zu leiten. Bei der Ausbreitung der Lichtstrahlen innerhalb der Tragschicht können, insbesondere an den Aussenflächen der Tragschicht, (Mehrfach-)Reflexionen auftreten.

Das Bauteil kann ausserdem ein Gehäuse aufweisen, in welchem das oder die Leuchtelemente bevorzugt angeordnet sind. Die Tragschicht kann lösbar, zum Beispiel mittels Rastelementen, oder unlösbar am Gehäuse befestigt sein. Das Gehäuse ist vorteilhaft opak.

Die eine oder die mehreren Lichtumlenkstrukturen sind im Bereich der Tragschicht angeordnet. Verluste bei der Lichtausbreitung können dadurch minimiert werden. Vorteilhaft bilden die Lichtumlenkstrukturen jeweils sogar einen Teil der Tragschicht. Beispielsweise können die Lichtumlenkstrukturen als lokale chemische oder physikalische Materialveränderungen oder als lokale Oberflächenerhebungen oder -vertiefungen der Tragschicht und/oder der Lackschicht vorgesehen sein. Auch das Einbringen von Fremdmaterialien oder von Lufteinschlüssen zur Ausbildung der Lichtumlenkstrukturen ist denkbar. Möglich ist aber auch, dass die Lichtumlenkstrukturen von einem anderen Element als der Tragschicht und der Lackschicht gebildet werden. So können die Lichtumlenkstrukturen zum Beispiel von einem direkt an der Tragschicht oder der Lackschicht angebrachten Zusatzteil, wie beispielsweise einer Folie, insbesondere einer reflektierenden Folie, gebildet werden. Bevorzugt sind die Lichtumlenkstrukturen jedoch derart vorgesehen und angeordnet, dass die Lichtstrahlen bei der Umlenkung nicht oder höchstens kaum aus der Tragschicht und/oder der Lackschicht austreten.

Die Brechungsindizes der Tragschicht und der Lackschicht unterscheiden sich bevorzugt um mindestens 0.001 bis maximal 0.3. Dabei kann der Brechungsindex der Tragschicht grösser als derjenige der Lackschicht sein, oder der Brechungsindex der Lackschicht kann grösser als derjenige der Tragschicht sein. Die Vorteile der Erfindung ergeben sich insbesondere aus dem Brechungsindexunterschied zwischen Tragschicht und Lackschicht. Dieser Brechungsindexunterschied kann eine Totalreflexion für Lichtstrahlen im Grenzbereich zwischen der Tragschicht und der Lackschicht bewirken, sofern der Einfallswinkel (Winkel zur Flächennormalen) der Lichtstrahlen an der Grenzfläche einen bestimmten Wert, nämlich den vom Brechungsindexunterschied abhängigen Grenzwinkel der Totalreflexion, überschreitet. Gemäss einer bevorzugten Ausführungsform ist der Brechungsindex der Lackschicht kleiner als der Brechungsindex der Tragschicht. Das in die Tragschicht eingekoppelte Licht kann sich somit in einer durch die Lackschicht beschädigungssicher geschützten Tragschicht ausbreiten. Gemäss einer weiteren bevorzugten Ausführungsform ist der Brechungsindex der Tragschicht kleiner als der Brechungsindex der Lackschicht. Das in die Lackschicht eingekoppelte Licht kann sich somit in der Lackschicht ausbreiten.

In gewissen Ausführungsformen kann die Lackschicht bereichsweise opak ausgebildet sein. Alternativ oder zusätzlich kann auch die Tragschicht bereichsweise opak ausgebildet sein. Mittels opaker Bereiche können zum Beispiel beliebige Symbole dargestellt oder andere optische Effekte erzeugt werden.

Gemäss einer Weiterbildung der Erfindung kann die Lackschicht, alternativ oder zusätzlich aber auch die Tragschicht, von der Sichtseite her gesehen, aufgrund ihrer Form eines oder mehrere Symbole bilden. Die erwähnte Form kann den vom Betrachter wahrgenommenen Umriss der Lackschicht und/oder der Tragschicht betreffen. Alternativ oder zusätzlich kann die erwähnte Form der Tragschicht aber auch eine oder mehrere Erhebungen oder Vertiefungen, also die 3D-Form, der Lackschicht und/oder der Tragschicht betreffen. Die Erhebungen und/oder Vertiefungen der Tragschicht oder der Lackschicht, welche das eine oder die mehreren Symbole bilden, können zudem gleichzeitig auch die erwähnten Lichtumlenkstrukturen bilden. Im Falle, dass die Tragschicht Erhebungen und/oder Vertiefungen aufweist, ergibt sich der zusätzliche Vorteil, dass dadurch die Haftung der Lackschicht an der Tragschicht verbessert wird.

Unter einem "Symbol" werden im Rahmen dieses Dokuments zum Beispiel Buchstaben, Zahlen, Schriftzüge, Logos, Markenangaben, Piktogramme oder ähnliches verstanden.

Alternativ oder zusätzlich können auch die eine oder die mehreren Lichtumlenkstrukturen, von der Sichtseite her gesehen, jeweils allein oder gemeinsam eines oder mehrere Symbole bilden. Es ergeben sich daraus vielfältige Möglichkeiten in der Gestaltung des Bauteils.

Die Lackschicht ist bevorzugt unmittelbar an der Tragschicht angebracht, insbesondere an dieser angespritzt. In gewissen Ausführungsformen ist zwischen der Lackschicht und der Tragschicht bevorzugt keine weitere Schicht, insbesondere keine Schicht aus Metall, Kunststoff, Keramik oder Holz, angeordnet. Auch ist in gewissen weiteren Ausführungsformen keine Folie zwischen der Lackschicht und der Tragschicht angeordnet oder das Bauteil weist sogar überhaupt keine Folie auf.

Die Tragschicht weist bevorzugt eine zur Sichtseite des Bauteils hin gewandte Vorderseite auf, die von der Lackschicht zu zumindest 20 Prozent, bevorzugt zu zumindest 30 Prozent, bevorzugter zu zumindest 40 Prozent, noch bevorzugter zu zumindest 50 Prozent, noch bevorzugter zu zumindest 75 Prozent, und am bevorzugtesten zu zumindest 95 Prozent, bedeckt wird.

Die Tragschicht und/oder die Lackschicht können eine durch das Spritzgussverfahren bedingte Angussstelle aufweisen, welche zum Beispiel mittels Wasserstrahlschneiden, Stanzen oder mittels eines Lasers entfernt werden kann. Die Angussstelle, welche insbesondere auch durch die Tragschicht und die Lackschicht gemeinsam gebildet sein kann, kann aber auch am Bauteil belassen werden und beispielsweise als Befestigungselement oder als Lichtleiter zum Einkoppeln von Licht eines Leuchtelements dienen.

Gemäss einer Weiterbildung der Erfindung kann die Tragschicht mittels eines Thermoplast-Schaumspritzguss-Verfahrens und bevorzugt mit Hilfe eines chemischen oder physikalischen Treibmittels hergestellt sein. Die Tragschicht kann dadurch mit einem geringeren Gewicht hergestellt werden. Die Schäumung kann aber auch zwecks Erzielung von speziellen Licht- und/oder Designeffekten erzeugt werden.

In gewissen bevorzugten Ausführungsformen kann das Bauteil einen opak ausgebildeten Rand aufweisen, um den Austritt von Lecklicht am Rand zu unterbinden. Der opak ausgebildete Rand ist bevorzugt vollständig umlaufend ausgebildet.

Nach einer Weiterbildung der Erfindung weist das Bauteil einen wenigstens bereichsweise transluzent oder transparent ausgebildeten Rand, welcher bevorzugt vollständig umlaufend ausgebildet ist, auf. Dies bietet den Vorteil, dass die Lackschicht, insbesondere von der Sichtseite des Bauteils her gesehen, von Licht umstrahlt wird und somit als schwebend erscheint. Um eine besonders starke Lichtabstrahlung im Randbereich zu erzielen, sind bevorzugt im Rand Lichtumlenkstrukturen angeordnet.

Um eine Verstärkung der Tragschicht bzw. eine dünnere Ausbildung der Tragschicht bei gleichbleibender struktureller Festigkeit zu erreichen, kann diese Verstärkungsfasern aufweisen, welche bevorzugt lichtleitend ausgebildet sind. Die Verstärkungsfasern können auch zur Erzielung spezieller optischer Effekte dienen.

Zur Erzielung weiterer optischer Effekte können die Lackschicht und/oder die Tragschicht einen Farbstoff, insbesondere Farbpigmente, beinhalten. Der Farbstoff, insbesondere die Farbpigmente, können homogen oder inhomogen innerhalb der Lackschicht und/oder der Tragschicht angeordnet sein.

Die Tragschicht kann, insbesondere falls sie aus Kunststoff hergestellt ist, Additive wie Entformungsmittel, Thermostabilisatoren, UV-Absorber, aber auch Flammschutzmittel, IR-Absorber, Antistatika, Farbmittel etc. enthalten.

Die Lackschicht kann aus einem Einkomponentenlack oder einem Mehrkomponentenlack, insbesondere aus einem Zweikomponentenlack, gebildet sein. Im Falle eines Zweikomponentenlacks ist die erste Komponente beispielsweise Polyol und die zweite Komponente beispielsweise ein Polyisocyanat, so dass aus der Reaktion des Polyols und des Polyisocyanats ein vernetztes Polymer, d.h. Polyurethan, entsteht. Alternativ kann im Falle eines Zweikomponentenlacks die erste Komponente beispielsweise ein Isocyanat und die zweite Komponente beispielsweise ein Amin sein, so dass aus der Reaktion des Isocyanats und des Amins ein vernetztes Polymer, d.h. Polyurea, entsteht. Je nach dem gewünschten Design kann die Lackschicht hochglänzend oder matt sein. Der Lack der Lackschicht kann ein Softlack mit bevorzugt einem Härtegrad von weniger als 20 Shore-A sein, welcher bevorzugt gemäss der Norm DIN 53505, Ausgabe vom August 2000, gemessen ist, und/oder ein kratzfester Lack mit bevorzugt einem Härtegrad von 20 Shore-A bis 100 Shore-D, insbesondere von 20 Shore-A bis 65 Shore-D, sein, wobei der Härtegrad jeweils bevorzugt gemäss der Norm DIN 53505, Ausgabe vom August 2000, gemessen ist. Dem Fachmann sind Lacke bekannt.

Die Lackschicht ist bevorzugt unlösbar an der Tragschicht angebracht, das heisst sie nur durch Beschädigung bzw. Zerstörung von der Tragschicht gelöst werden.

Die Dicke der Lackschicht ist bevorzugt in einem Bereich von grösser als 0 bis maximal 12'000 Mikrometer, bevorzugter von grösser als 25 bis maximal 12'000 Mikrometer, noch bevorzugter von grösser als 25 bis maximal 3'000 Mikrometer, noch bevorzugter von grösser als 25 bis maximal 1'000 Mikrometer, noch bevorzugter von grösser als 25 bis maximal 800 Mikrometer, noch bevorzugter von grösser als 25 bis maximal 600 Mikrometer, noch bevorzugter von grösser als 25 bis maximal 400 Mikrometer, noch bevorzugter von grösser als 25 bis maximal 200 Mikrometer, noch bevorzugter von grösser als 25 bis maximal 200 Mikrometer, und am bevorzugtesten von grösser als 25 bis weniger als 100 Mikrometer. Bei einer zu dicken Lackschicht werden die Kosten zur Herstellung des Bauteils aufgrund der üblicherweise hohen Kosten für den Lack hoch. Bei einer zu dünnen Lackschicht wird das Bauteil hingegen anfällig für Kratzer, da sich diese durch die Lackschicht hindurch erstrecken können. Ausserdem kann der physikalische und chemische Schutz der Tragschicht durch die Lackschicht dann nicht mehr ausreichend sein. Die angegebenen bevorzugten Dickenbereiche stellen ein Optimum zwischen diesen einander entgegenlaufenden Anforderungen dar. Um Lichtumlenkstrukturen im Inneren der Lackschicht mittels eines Lasers zu erzeugen, sollte diese eine Dicke von 0.4 Millimeter oder mehr aufweisen. Bevorzugt ist die Lackschicht über ihre gesamte Flächenerstreckung im Wesentlichen gleich dick, damit sich eine homogene Ausleuchtung der Sichtseite ergibt. Die Lackschicht kann auch über ihre Flächenerstreckung eine variierende Dicke aufweisen. Dies ermöglicht die Erzeugung von verschiedensten Lichtdesigneffekten. Eine dünner werdende Lackschicht weist den Vorteil auf, dass mit dünner werdender Lackschicht die Helligkeit der Ausleuchtung der Sichtseite des Bauteils zunimmt.

Gemäss einer Weiterbildung der Erfindung kann die Lackschicht mittels eines Spritzpräge-Verfahrens hergestellt sein. In diesem Fall liegt die Dicke der Lackschicht bevorzugt in einem Bereich von grösser als 0 bis 100 Mikrometer oder kleiner, insbesondere in einem Bereich von grösser als 25 bis 100 Mikrometer oder kleiner.

Die Lackschicht weist bevorzugt einen äusseren Randbereich mit einer sich schräg erstreckenden Aussenfläche auf, die in einem Winkel von 40° bis 89° zur Flächenausdehnungsrichtung der Tragschicht steht. Eine Aussenfläche, die in einem solchen Winkel zur Tragschicht steht, bildet nicht nur einen ästhetisch ansprechenden Abschluss des Bauteils, sondern ermöglicht auch eine gute Ausleuchtung der Lackschicht, insbesondere auch in Fällen, in denen diese verhältnismässig dünn ausgebildet ist. Die Aussenfläche kann aber auch in einem Winkel von mehr als 85° bis 89° zur Flächenausdehnungsrichtung der Tragschicht stehen, um dadurch zum Beispiel einen aus Sicht des Betrachters klar definierten seitlichen Abschluss der Sichtfläche zu bilden.

Die Lackschicht kann sich, muss aber nicht, über den äusseren Rand der Tragschicht hinaus und bis zur randseitigen Stirnseite der Tragschicht erstrecken. Diese Erstreckung über den äusseren Rand der Tragschicht hinaus kann insbesondere umlaufend, d.h. im gesamten Randbereich der Tragschicht, vorliegen.

Gemäss einer Weiterbildung der Erfindung kann die Tragschicht an ihrem äusseren Rand bündig mit der Lackschicht abschliessen. Der äussere Rand der Tragschicht kann dadurch bei der Herstellung als Dichtmittel gegenüber dem Lack benutzt werden, d.h. der äussere Rand der Tragschicht dichtet gegenüber dem Formwerkzeug ab und behindert dadurch eine weitere Ausbreitung des Lacks.

Um die Haftung der Lackschicht an der Tragschicht zu verbessern, kann die zwischen diesen beiden Schichten angeordnete Grenzfläche ineinandergreifende lokale Erhöhungen und Vertiefungen aufweisen. Diese im Bereich der Grenzfläche vorhandenen lokalen Erhöhungen und Vertiefungen können insbesondere die erwähnten Lichtumlenkstrukturen bilden. Auch eine Oberflächenaktivierung mittels einer Plasma- oder Koronabehandlung oder mittels Beflammung kann vorgesehen sein, um die Haftung der Lackschicht an der Tragschicht zu verbessern.

Gemäss einer Weiterbildung der Erfindung können die eine oder die mehreren Lichtumlenkstrukturen insbesondere innerhalb des transluzent oder transparent ausgebildeten Bereiches der Tragschicht angeordnet sein. Die Lichtumlenkstrukturen sind dann besonderes sicher vor physikalischen und chemischen Beschädigungen. Vorteilhaft werden die Lichtumlenkstrukturen dann mittels eines Lasers gebildet.

Die eine oder die mehreren Lichtumlenkstrukturen können aber auch, um die Herstellung insbesondere im Spritzgussverfahren zu vereinfachen, an einer Oberfläche der Tragschicht angeordnet sein. Die Lichtumlenkstrukturen können in diesem Fall zum Beispiel an einer inneren Oberfläche eines Spritzgusswerkzeugs ausgebildet sein. Falls die Tragschicht mittels Extrusion hergestellt werden, kann ein Werkzeugeinsatz mit Erhebungen und/oder Vertiefungen verwendet werden, um die Lichtumlenkstrukturen auszubilden. Die an der Oberfläche angeordneten Lichtumlenkstrukturen können aber auch mittels eines Lasers oder mittels eines Prägeverfahrens hergestellt werden, oder sie können eingefräst, erodiert, wie beispielsweise durch Elektroerosion, eingeätzt oder aufgedruckt werden.

Vorzugsweise sind die Lichtumlenkstrukturen durch eine lokale Materialveränderung, insbesondere durch eine Aufschmelzung des Materials, der Tragschicht hergestellt. Das Material der Tragschicht wird zur Herstellung der Lichtumlenkstrukturen also vorzugsweise an den entsprechenden Stellen mittels Wärmeeinwirkung aufgeschmolzen und wieder abgekühlt. Es wird dadurch an den jeweiligen Stellen eine lokale Strukturveränderung des Materials bewirkt, wodurch die Lichtumlenkstrukturen gebildet werden. Das Material wird dabei vorzugsweise aber nicht karbonisiert.

Je nachdem welche Art von Material für die Tragschicht verwendet wird, nehmen die in deren Inneren erzeugten Lichtumlenkstrukturen unterschiedliche Formen an, welche für bestimmte Anwendungen bevorzugt sein können.

Bevorzugt sind mehrere der Lichtumlenkstrukturen nebeneinander in einer gemeinsamen Ebene der Tragschicht angeordnet und weisen dabei vorteilhaft alle dieselbe Orientierung auf. Es können zwei oder mehrere Ebenen innerhalb der Tragschicht vorhanden sein, in welchen jeweils eine Vielzahl von Lichtumlenkstrukturen in jeweils vorteilhaft derselben Orientierung angeordnet sind. Mittels einer Tragschicht mit in zwei oder mehreren Ebenen von Lichtumlenkstrukturen können verschiedenste Lichteffekte erzeugt werden.

Um eine optimale Form der Lichtumlenkstrukturen insbesondere dann zu erreichen, wenn diese im Inneren der Tragschicht angeordnet sind, werden die Lichtumlenkstrukturen bevorzugt mit Hilfe von grünem Laserlicht und/oder von Infrarot-Laserlicht hergestellt. Vorzugweise weist das grüne Laserlicht eine Wellenlänge im Bereich von 490 nm - 575 nm, insbesondere von ca. 532 nm, auf. Das Infrarot-Laserlicht weist vorteilhaft eine Wellenlänge im Bereich von 780 nm - 1400 nm, vorteilhafter im Bereich von 1000 nm - 1100 nm, insbesondere von ca. 1030 nm, auf. Infrarot-Laser sind in der Anschaffung günstig und besonders prozessstabil. Vorteilhaft wird ein Ultrakurzpulslaser, bevorzugter ein Femtosekundenlaser oder ein Pikosekundenlaser, verwendet. Bevorzugt ist der Grundkörper der Lichtumlenkstrukturen jeweils im Wesentlichen rotationssymmetrisch, insbesondere vollständig rotationssymmetrisch. Die Lichtumlenkstrukturen sind dadurch einfacher herstellbar, und die durch die Lichtumlenkstrukturen bewirkte Lichtumlenkung ist einfacher vorausrechenbar. Es kann insbesondere eine Leuchtdichtesimulationssoftware erstellt werden, um die Leuchtdichte an der Oberfläche und insbesondere an der Lichtauskoppelfläche eines Lichtleiters vorauszuberechnen, bzw. um umgekehrt dazu ausgehend von einer gewünschten Oberflächenleuchtdichte die Anordnung und/oder Ausbildung der Lichtumlenkstrukturen innerhalb des Lichtleiters zu bestimmen. Auf diese Art und Weise kann sehr einfach eine beliebige gewünschte Leuchtdichteverteilung an der Lichtleiteroberfläche erzielt werden. Durch die Rotationssymmetrie des Grundkörpers ist die Längsachse der jeweiligen Lichtumlenkstruktur bestimmt, welche mit der Symmetrieachse übereinstimmt. Unter dem Begriff "Leuchtdichte" wird das Verhältnis der Lichtstärke zur Grösse der sichtbaren leuchtenden Lichtauskoppelfläche verstanden, welche in Candela pro Quadratmeter der Lichtauskoppelfläche (cd/m²) angegeben wird.

Die im Inneren der Tragschicht angeordneten Lichtumlenkstrukturen weisen bevorzugt jeweils einen langgestreckten, insbesondere im Wesentlichen rotationssymmetrischen, Grundkörper mit einer oder mehreren daran angebrachten Elementen in Form von Fahnen auf. Vorteilhaft erstreckt sich die zumindest eine Fahne über 1/3 bis 2/3 der gesamten Längserstreckung des Grundkörpers. Die zumindest eine Fahne kann dabei insbesondere entlang einer ihrer Seiten über einen Bereich von 1/3 bis 2/3 der gesamten Längserstreckung des Grundkörpers mit diesem verbunden sein. Die Breite der Fahne, gemessen in eine senkrecht zur Längsachse des Grundkörpers stehende Richtung, beträgt bevorzugt höchstens 30 Mikrometer. Bevorzugt sind zumindest jeweils zwei Fahnen auf im Wesentlichen diametral einander gegenüberliegenden Seiten am Grundkörper angebracht. Die eine oder mehreren Fahnen bilden vorteilhaft als Ganzes jeweils eine im Wesentlichen ebene Fläche, die sich vom Grundkörper aus in eine radiale Richtung nach aussen hin erstreckt. Vorteilhaft ist der Grundkörper einteilig oder mehrteilig, bevorzugt einteilig ausgebildet. Der Grundkörper ist vorteilhaft entlang seiner Längsrichtung um ein Vielfaches grösser dimensioniert als in die senkrecht zu dieser Längsrichtung stehenden Richtungen. Der Grundkörper kann zudem entlang seiner Längsrichtung jeweils eine lokale Verdickung aufweisen, die in Bezug auf die Längsrichtung des Grundkörpers bevorzugt bei 15 - 35 Prozent der gesamten Längserstreckung des Grundkörpers angeordnet ist. Die Grundkörper der Lichtumlenkstrukturen weisen bevorzugt jeweils eine Längserstreckung von mindestens 100 Mikrometer, bevorzugter von mindestens 300 Mikrometer, auf. Die im Inneren der Tragschicht und/oder der Lackschicht angeordneten Lichtumlenkstrukturen können insbesondere entsprechend den Angaben in der WO 2017/174548 A1 ausgebildet sein, deren kompletter Inhalt hiermit unter Bezugnahme miteinbezogen wird. Es hat sich gezeigt, dass Lichtstrahlen, welche insbesondere seitlich, das heisst aus einer im Wesentlichen senkrecht zur Längsrichtung der Lichtumlenkstrukturen stehenden Richtung, auf eine der derart ausgebildeten Lichtumlenkstrukturen auftreffen, eine Umlenkung zur Längsrichtung der Lichtumlenkstruktur hin erfahren. Konkret wird das Licht dabei jeweils zur Längsachse des Grundkörpers hin umgelenkt, welche sich zentral in Längsrichtung durch den Grundkörper hindurch erstreckt. Durch das Vorsehen einer Vielzahl von derartigen Lichtumlenkstrukturen in der Tragschicht und/oder in der Lackschicht kann somit eine gezielte Lichtumlenkung des eingestrahlten Lichts in eine oder mehrere bestimmte Richtungen erreicht werden. Das Licht kann dadurch in eine oder mehrere einstellbare Richtungen aus der Tragschicht ausgekoppelt werden. Je nach Ausrichtung und Lage der Lichtumlenkstrukturen kann die Lichtauskopplung derart eingestellt werden, dass sie zum Beispiel fokussiert aus der Tragschicht in eine bestimmte Richtung oder diffus in einen bestimmten Richtungsbereich erfolgt. Die an der Oberfläche der Tragschicht und/oder der Lackschicht angeordneten Lichtumlenkstrukturen können insbesondere entsprechend den Angaben in der EP 2 853 806 A1 ausgebildet sein, deren kompletter Inhalt hiermit unter Bezugnahme miteinbezogen wird.

Vorzugsweise sind die im Inneren der Tragschicht angeordneten Lichtumlenkstrukturen also mittels eines Lasers hergestellt. Das Laserlicht bewirkt in diesem Fall an den entsprechenden Stellen in der Tragschicht jeweils bevorzugt einen lokalen Wärmeeintrag, welcher zu einer Materialaufschmelzung führt. Die Herstellung der Lichtumlenkstrukturen mittels eines Lasers ist nicht nur besonders einfach, sondern kann auch einfach derart durchgeführt werden, dass die erwähnten langgestreckten Grundkörper sowie die angegebenen lokalen Verdickungen und Fahnen entstehen. Bei der Herstellung der Lichtumlenkstrukturen mittels eines Lasers kann gewährleistet werden, dass das Material zwar lokal aufgeschmolzen, nicht aber karbonisiert wird. Selbstverständlich können die Lichtumlenkstrukturen aber auch mittels beliebiger anderer, dem Fachmann bekannten Verfahren hergestellt werden.

Die Lichtumlenkstrukturen können insbesondere derart ausgebildet und/oder im Bereich der Tragschicht angeordnet sein, dass das von den Lichtumlenkstrukturen jeweils allein oder gemeinsam ausgekoppelte Licht als ein Symbol erscheint.

Nach einer Weiterbildung der Erfindung sind die Lichtumlenkstrukturen als lokale Oberflächenerhebungen und/oder -vertiefungen an der Rückseite der Tragschicht vorgesehen. Bevorzugt sind die Lichtumlenkstrukturen als Oberflächenvertiefungen ausgebildet. Die Anordnung der Lichtumlenkstrukturen an der Rückseite der Tragschicht bewirkt den Vorteil, dass die Lichtumlenkstrukturen weniger anfällig auf Umwelteinflüsse sowie Beschädigung sind. Dies ist insbesondere bei als Oberflächenvertiefungen ausgebildeten Lichtumlenkstrukturen der Fall.

Das Bauteil kann ausserdem ein Zusatzteil aufweisen, das innerhalb der Lackschicht oder der Tragschicht oder zwischen der Lackschicht und der Tragschicht angeordnet ist. Gemäss einer bevorzugten Ausführungsform ist das Zusatzteil derart angeordnet, dass eine Vorderseite des Zusatzteils bündig mit der Vorderseite der Tragschicht ist. Nach einer weiteren Ausführungsform ist das Zusatzteil derart angeordnet, dass eine Vorderseite des Zusatzteils relativ zur Vorderseite der Tragschicht erhaben angeordnet ist. Die Vorderseite oder die Rückseite der Tragschicht oder der Lackschicht kann eine Vertiefung aufweisen, innerhalb welcher das Zusatzteil angeordnet ist. Bevorzugt wird das Zusatzteil bei der Herstellung jedoch wenigstens teilweise, bevorzugt vollständig, vom Material der Tragschicht umspritzt. Dadurch ist das Zusatzteil optimal geschützt. Beim Zusatzteil kann es sich beispielsweise um eine Folie, ein elektronisches Bauelement oder eine vorkonfektionierte Schicht handeln. Im Falle einer Folie kann es sich insbesondere um eine lichtreflektierende Folie oder um eine Elektrolumineszenzfolie handeln. Die Folie kann sowohl transparente bzw. transluzente als auch opake Bereiche aufweisen und dadurch insbesondere eines oder mehrere Symbole bilden. Falls die Folie oder die vorkonfektionierte Schicht vollständig opak ausgebildet ist, so kann die Folie oder die vorkonfektionierte Schicht optional wenigstens einen Durchbruch aufweisen, durch welchen Licht hindurchtreten kann. Hierdurch können verschiedenste Lichteffekte erzielt werden. Im Falle eines elektronischen Bauelements kann es zum Beispiel eine Elektronikeinheit mit einer Leiterplatte sein, oder auch ein Sensor, ein Bildschirm, eine Batterie oder ein Solarmodul. Nach einer Weiterbildung der Erfindung ist die vorkonfektionierte Schicht, vorteilhaft im Spritzgussverfahren, aus Kunststoff oder aus Metall hergestellt. Eine vorkonfektionierte Schicht ist eine Schicht, welche beispielsweise vorgeschnitten, vorgeformt usw. ist. Falls das Zusatzteil ein Sensor ist, kann es sich insbesondere um einen optischer Sensor, beispielsweise einen Infrarotsensor oder Lidarsensor, einen akustischen Sensor, beispielsweise ein Ultraschallsensor, einen elektromagnetischen Sensor, beispielsweise einen induktiven Sensor, kapazitiven Sensor oder Radarsensor, einen Beschleunigungssensor, einen Geschwindigkeitssensor oder einen Sensor zur Erfassung von Umgebungsparametern, beispielsweise einen Temperatursensor, Feuchtigkeitssensor oder Helligkeitssensor, handeln. Der Sensor kann berührungslos oder durch Berührung bedienbar sein. Falls die Folie eine lichtreflektierende Folie ist, so ist die lichtreflektierende Folie bevorzugt an einer von der Sichtseite des Bauteils abgewandten Oberfläche der Tragschicht, welche Lackschicht und/oder Tragschicht bevorzugt als Lichtleiter ausgebildet ist, angeordnet. Dies bietet den Vorteil, dass in der Lackschicht und/oder Tragschicht sich fortpflanzendes Licht in die Richtung der Sichtseite des Bauteils umgelenkt werden kann.

Um ein Zusatzteil beim Anspritzen der Lackschicht zu schützen, kann die Tragschicht eines oder mehrere vorstehende Schwallelemente, wie insbesondere eine oder mehrere Schwallwände aufweisen. Die Schwallelemente dienen dann dazu, den Lack beim Anspritzvorgang derart zu leiten, dass das Zusatzteil nicht verschoben oder gar beschädigt wird.

Gemäss einer Weiterbildung der Erfindung kann die Tragschicht eine Durchgangsöffnung aufweisen, und die Lackschicht wird mittels Durchführen von Lack durch diese Durchgangsöffnung hindurch hergestellt. Dadurch kann verhindert werden, dass an der Sichtseite des Bauteils ein Anspritzpunkt der Lackschicht sichtbar ist. Die Lackschicht erstreckt sich somit in die Durchgangsöffnung hinein, wobei die Lackschicht sich bevorzugt wenigstens von der Vorderseite der Tragschicht zur Rückseite der Tragschicht erstreckt.

Auf der Sichtseite des Bauteils kann insbesondere im Bereich der Lackschicht eine ablösbare Schutzfolie angebracht sein, um zwischen Produktion und Anwendung die Sichtseite zu schützen.

An der Tragschicht und/oder an der Lackschicht, insbesondere im Grenzbereich zwischen diesen beiden Schichten, kann in gewissen Ausführungsformen wenigstens eine Zwischenschicht angeordnet sein. Die Zwischenschicht ist beispielsweise durch eine Folie, insbesondere eine thermoplastische Folie, Partikel, einem Klebstoff oder einem Haftvermittler gebildet. Die Zwischenschicht, welche beispielsweise durch die Folie, insbesondere die thermoplastische Folie, oder die Partikel gebildet ist, ist bevorzugt zwischen der Tragschicht und der Lackschicht eingebettet und vorzugsweise nicht über ein Befestigungsmittel, wie beispielsweise einem Klebstoff oder einem Haftvermittler an der Lackschicht und/oder der Tragschicht befestigt. Falls die Zwischenschicht an der Lackschicht und/oder der Tragschicht mittels eines Befestigungsmittels befestigt ist, so ist dieses Befestigungsmittel bevorzugt ein Klebstoff oder ein Haftvermittler. Die thermoplastische Folie weist den Vorteil auf, dass die thermoplastische Folie durch Erwärmung klebrig wird und somit die Lackschicht und die Tragschicht miteinander verbinden kann. Die genannte Wärme entsteht beispielsweise bei der Herstellung des Bauteils mittels Spritzguss und/oder Extrusion.

Die Zwischenschicht ist bevorzugt transluzent oder transparent ausgebildet. Eine solche Zwischenschicht kann Lichtumlenkstrukturen aufweisen. Die Zwischenschicht kann auch wenigstens bereichsweise opak ausgebildet sein. Die opake Zwischenschicht kann optional wenigstens einen Durchbruch aufweisen, durch welchen Licht hindurchtreten kann. Die Zwischenschicht, insbesondere die Folie, kann vielfältige Funktionen erfüllen, wie beispielsweise eine Einfärbung des vom Leuchtelement ausgestrahlten Lichts oder einen Schutz des Bauteils vor Schmutzpartikeln. Die Zwischenschicht kann zudem optische Effekte ermöglichen. Wird die Zwischenschicht durch die Folie gebildet, so weist eine solche Folie bevorzugt eine Dicke im Bereich von 0.05 Millimeter bis 1 Millimeter, bevorzugter eine Dicke im Bereich von 0.2 Millimeter bis 0.8 Millimeter, auf. Wird die Zwischenschicht durch einen Haftvermittler oder einen Klebstoff gebildet, so weist eine solcher Haftvermittler bzw. Klebstoff bevorzugt eine Dicke im Bereich von 5 Mikrometer bis 1 Millimeter auf. Im Falle, dass im Grenzbereich zwischen der Tragschicht und der Lackschicht wenigstens eine Zwischenschicht, wie beispielsweise die Folie, der Klebstoff, der Haftvermittler oder die Partikel, angeordnet ist, so weist in einer ersten bevorzugten Ausführungsform das Material der Tragschicht einen geringeren Brechungsindex auf als das Material der Zwischenschicht, wobei der Brechungsindex des Materials der Zwischenschicht einen grösseren Brechungsindex als das Material der Lackschicht aufweist. Diese Ausführungsform bietet den Vorteil, dass ein Bauteil herstellbar ist, bei welchem die Tragschicht aus einem Material, insbesondere aus Kunststoff, herstellbar ist, welches einen geringeren Brechungsindex aufweist als das Material, aus welchem die Lackschicht hergestellt ist, und die Tragschicht trotzdem als Lichtleiter wirken kann. Bei dieser Ausführungsform ist die Tragschicht bevorzugt aus Polymethylmethacrylat (PMMA) hergestellt. Im Falle, dass im Grenzbereich zwischen der Tragschicht und der Lackschicht wenigstens eine Zwischenschicht, wie beispielsweise die Folie, der Klebstoff, der Haftvermittler oder die Partikel, angeordnet ist, so weist in einer zweiten bevorzugten Ausführungsform das Material der Tragschicht einen grösseren Brechungsindex auf als das Material der Zwischenschicht, wobei die Lackschicht bevorzugt wenigstens bereichsweise opak ausgebildet ist. Dies bietet den Vorteil, dass die Tragschicht als Lichtleiter wirken kann und die opake Lackschicht das sich in der Tragschicht fortpflanzende Licht nicht absorbieren kann.

Die Tragschicht weist bevorzugt eine Dicke von 1 Millimeter oder grösser auf. Dadurch ist eine gewisse strukturelle Stabilität der Tragschicht gewährleistet. Zur Herstellung einer 3D-Struktur an der Oberfläche und/oder innerhalb der Tragstruktur weist die Tragschicht bevorzugt eine Dicke von 1 bis 3 Millimeter auf. Bevorzugt weist die Tragschicht eine maximale Dicke von 10 Millimeter auf. Insbesondere falls die Tragschicht aus thermoplastischem Kunststoff im Spritzguss hergestellt ist, weist die Tragschicht bevorzugt eine maximale Dicke von 10 Millimeter auf, da bei einer solchen Dicke eine rasche Abkühlung der Tragschicht nach deren Herstellung noch möglich ist. Um Lichtumlenkstrukturen im Inneren der Tragschicht mittels eines Lasers zu erzeugen, sollte diese bevorzugt eine Dicke von 0.4 Millimeter oder mehr aufweisen.

Die Lackschicht und/oder die Tragschicht und/oder ein Zusatzteil des Bauteils kann bzw. können gemäss einer Weiterbildung der Erfindung als Diffusor ausgebildet sein, um eine gleichmässigere Ausleuchtung des Bauteils zu bewirken. Die Diffusorwirkung kann zum Beispiel mittels Einbringen von Partikeln und/oder Pigmenten oder mittels lokalen Materialveränderungen, hervorgerufen zum Beispiel mittels eines Lasers, erreicht werden.

Das zumindest eine Leuchtelement kann insbesondere innerhalb der Tragschicht oder innerhalb der Lackschicht oder zwischen der Tragschicht und der Lackschicht angeordnet sein. Das Leuchtelement ist dadurch nicht nur optimal vor Umwelteinflüssen geschützt, sondern es kann auch eine optimale Einkopplung des ausgestrahlten Lichts in die Tragschicht bzw. die Lackschicht erreicht werden. Die Vorderseite oder die Rückseite der Tragschicht oder der Lackschicht kann eine Vertiefung aufweisen, innerhalb welcher das Leuchtelement angeordnet ist. Bevorzugt werden das oder die Leuchtelemente bei der Herstellung jedoch wenigstens teilweise, bevorzugt vollständig, vom Material der Tragschicht und/oder der Lackschicht umspritzt. Vorteilhaft ragen dann lediglich die zur elektrischen Speisung des Leuchtelements vorgesehenen Anschlusskabel aus der Tragschicht bzw. Lackschicht hinaus. Um eine optimale Lichteinkopplung zu erreichen, ist das Material der Tragschicht bzw. der Lackschicht bevorzugt mindestens an der lichtemittierenden Oberfläche des Leuchtelementes angespritzt.

Das oder die Leuchtelemente können insbesondere auf einem Träger, beispielsweise auf einer Platine befestigt sein, und dieser Träger kann wenigstens teilweise in die Tragschicht und/oder die Lackschicht eingebettet sein. Das oder die Leuchtelemente bilden dann mit der Tragschicht bzw. der Lackschicht und gegebenenfalls mit einer Elektronik und Anschlusskabeln ein Beleuchtungsmodul. Dieses Beleuchtungsmodul bildet eine Einheit, die wenigstens bereichsweise durch Anspritzen mit der Tragschicht und/oder der Lackschicht verbunden ist. Vorzugsweise ist das gesamte Beleuchtungsmodul vom Material der Tragschicht und/oder der Lackschicht umspritzt. Das Beleuchtungsmodul ist dann besonders sicher im Bauteil integriert und damit gegen Umwelteinflüsse und insbesondere gegen Eindringen von Gasen, Flüssigkeiten, insbesondere von Wasser und Reinigungsmitteln, geschützt. Der Lichtverlust beim Einkoppeln des Lichtes in die Tragschicht bzw. Lackschicht kann zudem minimal gehalten werden. Ausserdem ist dadurch die Herstellung auch in grossen Serien insbesondere im Spritzgussverfahren vergleichsweise einfach, da lediglich das Beleuchtungsmodul im Spritzgusswerkzeug positioniert werden muss. Das Leuchtelement, der Träger oder das Beleuchtungsmodul kann mit wenigstens einem Positionierelement, beispielsweise einem Positionierstift, verbunden sein, um eine sichere Positionierung im Spritzgusswerkzeug zu gewährleisten. Falls die Leuchtelemente auf dem Träger, beispielsweise auf der Platine befestigt sind, so weist der Träger bevorzugt wenigstens einen Durchbruch auf, durch welchen Licht, insbesondere das von den Leuchtelementen ausgesendete Licht, hindurchtreten kann. Hierdurch kann die Lichtabschattung durch den Träger vermindert werden.

Die vorliegende Erfindung bezieht sich ausserdem auf ein Verfahren zur Herstellung eines Bauteils, bevorzugt für ein Fahrzeug und insbesondere für ein Bauteil wie es oben angegeben ist, aufweisend zumindest die Schritte:
- Anbringen, bevorzugt Anspritzen, einer Lackschicht an einer Tragschicht, um zumindest bereichsweise eine Sichtseite des Bauteils zu bilden;
- Vorsehen von zumindest einem Leuchtelement zum Hinterleuchten des Bauteils; sowie
- Vorsehen, insbesondere Ausbilden, von einer oder mehreren Lichtumlenkstrukturen im Bereich der Tragschicht, um das vom zumindest einen Leuchtelement ausgestrahlte Licht gezielt in eine oder mehrere bestimmte Richtungen oder in einen oder mehrere bestimmte Richtungsbereiche zur Sichtseite hin umzulenken,
wobei die Lackschicht und die Tragschicht wenigstens bereichsweise transluzent oder transparent ausgebildet sind.

Die erwähnten Verfahrensschritte können, müssen aber nicht, in der angegebenen Reihenfolge durchgeführt werden.

In einer bevorzugten Ausführungsform werden die eine oder die mehreren Lichtumlenkstrukturen im Spritzgussverfahren gemeinsam, insbesondere gleichzeitig, mit der Tragschicht hergestellt. Vorzugsweise wird hierfür ein Spritzgusswerkzeug verwendet, das auf seiner Innenseite entsprechende Erhebungen und/oder Vertiefungen aufweist, um die Lichtumlenkstrukturen auszubilden. Alternativ kann das Spritzgusswerkzeug auch einen Einsatz mit derartigen Erhebungen und/oder Vertiefungen aufweisen. Die Lichtumlenkstrukturen werden dann also gleichzeitig wie die Tragschicht hergestellt.

Die eine oder die mehreren Lichtumlenkstrukturen können alternativ oder zusätzlich aber auch mittels eines Lasers oder im Prägeverfahren hergestellt werden. Genauso ist es denkbar, die Lichtumlenkstrukturen einzufräsen, zu erodieren oder mittels eines Druckverfahren auf die Tragschicht aufzudrucken. Die Lichtumlenkstrukturen werden dann also erst nach der Herstellung der Tragschicht hergestellt.

Gemäss einer Weiterbildung der Erfindung werden das oder die Leuchtelemente bei der Herstellung zumindest teilweise, bevorzugt jedoch vollständig, mit dem Material der Tragschicht umhüllt.

Eine besonders effiziente Herstellung kann erreicht werden, indem Wendeplatten-, Schiebetisch- oder Drehtisch-Schliesseinheiten verwendet werden, in denen verschiedene Formwerkzeuge aufgenommen und sowohl die Tragschicht wie auch die Lackschicht, allenfalls von unterschiedlichen Bauteilexemplaren, zyklusweise und zyklusgleich hergestellt werden können. Solche Wendeplatten-, Schiebetisch- oder Drehtisch-Schliesseinheiten sind dem Fachmann aus dem Stand der Technik zur Genüge bekannt.

Vorzugsweise wird ein RIM (Reaction Injection Molding)-Spritzgussprozess, insbesondere ein PUR-RIM-Spritzgussprozess (PUR = Polyurethan) oder ein Polyurea-RIM-Spritzgussprozess angewandt. Der Prozess kann zudem mit einem Spritzprägeprozess kombiniert werden.

Falls bei der Herstellung ein Spritzgusswerkzeug verwendet wird und falls eines oder mehrere Leuchtelemente oder ein Zusatzteil, wie insbesondere ein Sensor oder ein anderes elektronisches Element, in der Tragschicht und/oder in der Lackschicht integriert werden sollen, weist das Spritzgusswerkzeug bevorzugt zumindest eine Vertiefung sowie optional in der Vertiefung vorgesehene Elemente zur Fixierung des bzw. der Leuchtelemente bzw. des Zusatzteils auf. Die Vertiefung ist vorteilhaft korrespondierend zu dem bzw. zu den Leuchtelementen bzw. zum Zusatzteil ausgebildet. Die Vertiefung kann insbesondere durch eine bevorzugt umlaufende Erhöhung, insbesondere eine kragenförmige Erhöhung, an der Innenseite des Spritzgusswerkzeugs gebildet sein. Durch die Anordnung in der Vertiefung sind die Leuchtelemente bzw. das Zusatzteil beim Ausbreiten des Lackmaterials oder des Trägermaterials in der Kavität des Spritzgusswerkzeugs vor einer unbeabsichtigten Verschiebung sowie vor Beschädigungen geschützt. Das oder die Leuchtelemente bzw. das Zusatzteil können mit oder ohne einer umgebenden Schutzhülle in das Spritzgusswerkzeug eingebracht werden. In bestimmten Ausführungsformen können das oder die Leuchtelemente bzw. das Zusatzteil noch zusätzlich von der Rückseite her, also bzgl. der Vertiefung von unten her, hinterspritzt werden. Hierfür kann in der Vertiefung z.B. ein zusätzlicher Einspritzkanal im Spritzgusswerkzeug vorgesehen sein, und/oder das Spritzgusswerkzeug kann eines oder mehrere bewegliche Formteilelemente aufweisen, um beispielsweise eine Erweiterung der Kavität auf der Rückseite des bzw. der Leuchtelemente bzw. des Zusatzteils zu ermöglichen. Das Leuchtelement bzw. Zusatzteil kann in der Vertiefung fixiert sein. Diese Fixierung ist durch eine Klemmung oder auch durch Haftung, beispielsweise mittels eines Klebers oder mittels Vakuum / elektrostatische Kräfte möglich. Das Spritzgusswerkzeug kann beispielsweise mit Bohrungen versehen sein, über welche an die Unterseite des Leuchtelements bzw. des Zusatzteils ein Vakuum anlegbar ist.

Beim Bauteil kann es sich um ein Interieurbauteil oder um ein Exterieurbauteil handeln. Im Falle eines Interieurbauteils ist die Lackschicht bevorzugt aus einem Softlack oder aus einem kratzfesten Lack, bevorzugter aus einem kratzfesten Lack, hergestellt. Der Softlack weist bevorzugt einen Härtegrad von weniger als 20 Shore-A auf, welcher bevorzugt gemäss der Norm DIN 53505, Ausgabe vom August 2000, gemessen ist. Der kratzfeste Lack weist bevorzugt einen Härtegrad von 20 Shore-A bis 100 Shore-D, insbesondere von 20 Shore-A bis 65 Shore-D, auf, wobei der Härtegrad jeweils bevorzugt gemäss der Norm DIN 53505, Ausgabe vom August 2000, gemessen ist. Im Falle eines Exterieurbauteils ist die Lackschicht bevorzugt aus einem kratzfesten Lack hergestellt und weist bevorzugt einen Härtegrad von 20 Shore-A bis 100 Shore-D, insbesondere von 20 Shore-A bis 65 Shore-D, auf, wobei der Härtegrad jeweils bevorzugt gemäss der Norm DIN 53505, Ausgabe vom August 2000, gemessen ist. Falls es sich um ein Exterieurbauteil handelt, weist dieses bevorzugt zumindest eine semipermeable Membran auf, um Feuchtigkeit aus dem Bauteil entweichen zu lassen, ohne dass von aussen her Feuchte in das Bauteil eindringen kann. Ausserdem kann die Tragschicht im Falle eines Exterieurbauteil insbesondere aus Polycarbonat hergestellt sein mit bevorzugt einer Erweichungstemperatur von mehr als 130°, bevorzugter von mehr als 140° und am bevorzugtesten von ca. 145°.

Nach einer Weiterbildung der Erfindung weist die Lackschicht eine einzige Schicht oder wenigstens zwei Schichten auf. Im Falle von wenigstens zwei Schichten liegen die wenigstens Schichten bevorzugt wenigstens teilweise übereinander.

Nach einer Weiterbildung der Erfindung weist die Tragschicht eine einzige Schicht oder wenigstens zwei Schichten auf. Im Falle von wenigstens zwei Schichten liegen die wenigstens zwei Schichten bevorzugt wenigstens teilweise übereinander.

Nach einer Weiterbildung der Erfindung bildet das Bauteil eine Abdeckung, wobei im verbauten Zustand bevorzugt eine Sichtseite der Abdeckung wenigstens teilweise, bevorzugt vollständig, sichtbar ist.

Nach einer Weiterbildung der Erfindung ist das Bauteil geeignet für ein Fahrzeug, insbesondere für ein Kraftfahrzeug. Bevorzugt weist ein Fahrzeug, insbesondere ein Kraftfahrzeug, das Bauteil auf. Im Falle, dass das Bauteil für ein Fahrzeug, insbesondere für ein Kraftfahrzeug, geeignet ist, kann das Bauteil insbesondere eine Fensterführungsblende, ein Spoiler, eine Verblendung einer A-, B-, C- oder D-Säule, eine Dreiecksblende, eine Fensterschachtleiste, eine Wasserfangleiste, eine Abdeckung oder Blende im Dachbereich, wie beispielsweise eine Abdeckung eines Panoramadaches, eine Abdeckung oder Blende im Konsolenbereich, eine Abdeckung oder Blende im Bereich des Armaturenbrettes, eine Blende oder Abdeckung im Türbereich, eine Blende oder Abdeckung im Bereich eines Kühlergrills, der Ladekante oder an einer Heckklappe, eine Zier-, Einstiegs- oder Türleiste, ein Emblem, oder eine Stossfängerverkleidung sein.

Nach einer Weiterbildung der Erfindung ist das Bauteil geeignet für ein Haushaltsgerät, wie beispielsweise einen Kühlschrank, einen Dampfgarer, eine Waschmaschine, einen Wäschetrockner, einen Backofen, einen Kochherd, eine Geschirrspühlmaschine oder ein Möbel. Bevorzugt weist das Haushaltsgerät oder das Möbel das Bauteil auf.

Nach einer Weiterbildung der Erfindung ist das Bauteil geeignet für Geräte, welche bei Verfahren zur chirurgischen oder therapeutischen Behandlung des menschlichen oder tierischen Körpers Anwendung finden, oder geeignet für Geräte, welche bei Diagnostizierverfahren, die bei menschlichen oder tierischen Körper vorgenommen werden, Anwendung finden. Bevorzugt weist ein solches Gerät das Bauteil auf.

Nach einer Weiterbildung der Erfindung ist das Bauteil geeignet für Konsumgüter, wie beispielsweise eine Kaffeemaschine oder einen Staubsauger, insbesondere für die Konsumgüterelektronik, wie beispielsweise einen Computer, einen Drucker, einen Scanner, einen Kopierapparat, einen Fernseher, einen CD-Spieler oder einen DVD-Spieler. Bevorzugt weist ein solches Konsumgut, insbesondere eine solche Konsumgüterelektronik, das Bauteil auf.

Nach einer Weiterbildung der Erfindung ist das Bauteil geeignet für einen Brausekopf, eine Sanitärarmatur, ein Klosett, eine Dusche oder einen Spühlkasten. Das Bauteil ist beispielsweise ein Bestandteil des Brausekopfes, der Sanitärarmatur, des Klosetts, der Dusche oder des Spühlkastens.

Nach einer Weiterbildung der Erfindung ist das Bauteil als Bedienelement ausgebildet, welches beispielsweise mittels Berührung oder berührungslos bedienbar ist.

Die vorliegende Offenbarung bezieht sich zudem und in unabhängiger Form auf ein Bauteil, bevorzugt für ein Fahrzeug, wobei das Bauteil insbesondere entsprechend den obigen Angaben ausgebildet sein kann, das Bauteil aufweisend
eine bevorzugt aus einem Kunststoff hergestellte Tragschicht;
eine an der Tragschicht, insbesondere im Spritzgussverfahren, angebrachte Lackschicht, welche wenigstens bereichsweise eine Sichtseite des Bauteils bildet; sowie
zumindest ein elektronisches Bauelement, wie insbesondere ein Leuchtelement oder ein Sensor, das innerhalb der Lackschicht oder innerhalb der Tragschicht oder zwischen der Lackschicht und der Tragschicht angeordnet ist.

Dieses weitere angegebene Bauteil ist bevorzugt, jedoch nicht zwingend, entsprechend den Angaben ausgebildet und hergestellt, welche bereits weiter oben zum hinterleuchtbaren Bauteil gemacht wurden. Dass die Tragschicht und die Lackschicht transluzent oder transparent ausgebildet sind, und dass Lichtumlenkstrukturen vorgesehen sind, um das von einem allfällig vorhandenen Leuchtelement ausgestrahlte Licht gezielt oder nicht gezielt umzulenken, ist bei diesem weiteren angegebenen Bauteil somit nicht zwingend notwendig.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Querschnittsansicht eines erfindungsgemässen hinterleuchtbaren Bauteils gemäss einer ersten Ausführungsform;
- Fig. 2a: eine schematische Ansicht eines ersten Schrittes im Verfahren zur Herstellung des in Fig. 1 gezeigten Bauteils;
- Fig. 2b: eine schematische Ansicht eines zweiten Schrittes im Verfahren zur Herstellung des in Fig. 1 gezeigten Bauteils;
- Fig. 2c: eine schematische Ansicht eines dritten Schrittes im Verfahren zur Herstellung des in Fig. 1 gezeigten Bauteils;
- Fig. 2d: eine schematische Ansicht eines vierten Schrittes im Verfahren zur Herstellung des in Fig. 1 gezeigten Bauteils;
- Fig. 2e: eine schematische Ansicht eines fünften Schrittes im Verfahren zur Herstellung des in Fig. 1 gezeigten Bauteils;
- Fig. 3: eine schematische Querschnittsansicht eines erfindungsgemässen hinterleuchtbaren Bauteils gemäss einer zweiten Ausführungsform;
- Fig. 4a: eine schematische Ansicht eines ersten Schrittes im Verfahren zur Herstellung des in Fig. 3 gezeigten Bauteils;
- Fig. 4b: eine schematische Ansicht eines zweiten Schrittes im Verfahren zur Herstellung des in Fig. 3 gezeigten Bauteils;
- Fig. 4c: eine schematische Ansicht eines dritten Schrittes im Verfahren zur Herstellung des in Fig. 3 gezeigten Bauteils;
- Fig. 4d: eine schematische Ansicht eines vierten Schrittes im Verfahren zur Herstellung des in Fig. 3 gezeigten Bauteils;
- Fig. 5a: eine schematische Ansicht eines ersten Schrittes im Verfahren zur Herstellung des in Fig. 5c gezeigten Bauteils;
- Fig. 5b: eine schematische Ansicht eines zweiten Schrittes im Verfahren zur Herstellung zur Herstellung des in Fig. 5c gezeigten Bauteils;
- Fig. 5c: eine schematische Querschnittsansicht eines erfindungsgemässen hinterleuchtbaren Bauteils gemäss einer dritten Ausführungsform;
- Fig. 6a: eine schematische Ansicht eines ersten Schrittes im Verfahren zur Herstellung des in Fig. 6c gezeigten Bauteils;
- Fig. 6b: eine schematische Ansicht eines zweiten Schrittes im Verfahren zur Herstellung zur Herstellung des in Fig. 6c gezeigten Bauteils;
- Fig. 6c: eine schematische Querschnittsansicht eines erfindungsgemässen hinterleuchtbaren Bauteils gemäss einer vierten Ausführungsform;
- Fig. 7: eine schematische Querschnittsansicht eines erfindungsgemässen hinterleuchtbaren Bauteils gemäss einer fünften Ausführungsform;
- Fig. 8a: eine schematische Ansicht eines ersten Schrittes im Verfahren zur Herstellung des in Fig. 8i gezeigten Bauteils;
- Fig. 8b: eine schematische Ansicht eines zweiten Schrittes im Verfahren zur Herstellung des in Fig. 8i gezeigten Bauteils;
- Fig. 8c: eine schematische Ansicht eines dritten Schrittes im Verfahren zur Herstellung des in Fig. 8i gezeigten Bauteils;
- Fig. 8d: eine schematische Ansicht eines vierten Schrittes im Verfahren zur Herstellung des in Fig. 8i gezeigten Bauteils;
- Fig. 8e: eine schematische Ansicht eines fünften Schrittes im Verfahren zur Herstellung des in Fig. 8i gezeigten Bauteils;
- Fig. 8f: eine schematische Ansicht eines sechsten Schrittes im Verfahren zur Herstellung des in Fig. 8i gezeigten Bauteils;
- Fig. 8g: eine schematische Ansicht eines siebten Schrittes im Verfahren zur Herstellung des in Fig. 8i gezeigten Bauteils;
- Fig. 8h: eine schematische Ansicht eines achten Schrittes im Verfahren zur Herstellung des in Fig. 8i gezeigten Bauteils; sowie
- Fig. 8i: eine schematische Querschnittsansicht eines erfindungsgemässen hinterleuchtbaren Bauteils gemäss einer sechsten Ausführungsform.

### BESCHREIBUNG BEVORZUGTER AUSFÜHRUNGSFORMEN

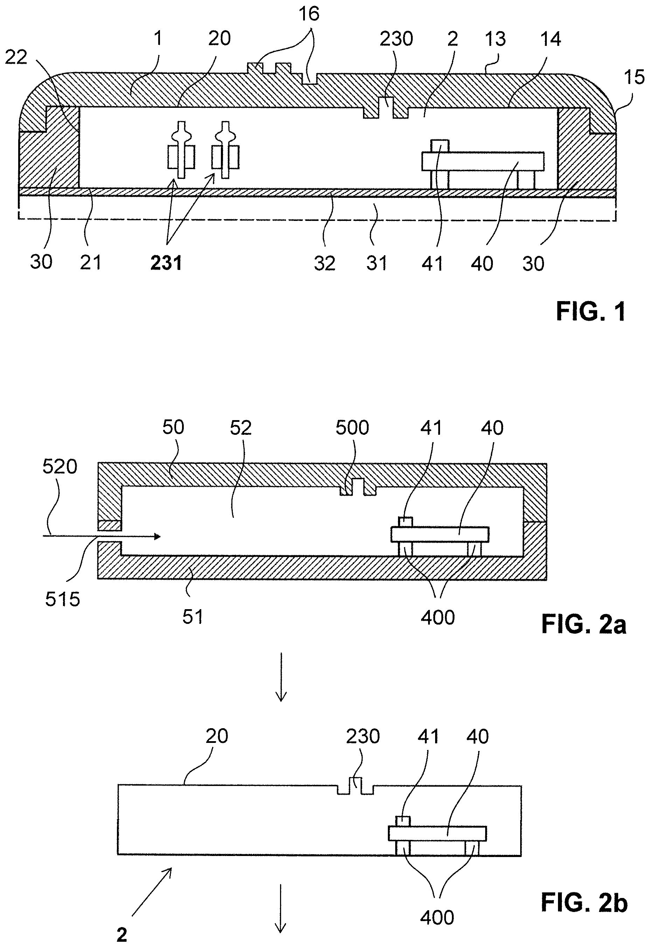

In den Figuren 1 bis 8i sind unterschiedliche erfindungsgemässe Ausführungsformen sowie Varianten davon und bevorzugte Verfahren zu deren Herstellung beispielhaft illustriert. Merkmale, welche eine identische oder zumindest ähnliche Ausgestaltung und/oder Funktion aufweisen, sind in den Figuren 1 bis 8i jeweils mit denselben Bezugszeichen versehen.

Die Figur 1 zeigt eine erste erfindungsgemässe Ausführungsform eines im Querschnitt schematisch dargestellten hinterleuchtbaren Bauteils eines Fahrzeugs, insbesondere eines Kraftfahrzeugs. Das gezeigte Bauteil kann ein Interieurbauteil zur Anordnung im Fahrgastraum eines Kraftfahrzeugs sein oder ein Exterieurbauteil zur Anordnung an der Aussenseite eines Kraftfahrzeugs.

Das Bauteil weist eine Tragschicht 2 sowie eine unmittelbar daran angebrachte, insbesondere daran angespritzte, Lackschicht 1 auf. Mittels eines Haftvermittlers 32, beispielsweise in Form eines Klebers, kann optional ein Gehäuse 31 (in der Figur 1 gestrichelt dargestellt) an einer Rückseite 21 der Tragschicht 2 angebracht sein.

Die Lackschicht 1 weist eine Vorder- bzw. Sichtseite 13 auf, welche im vorliegenden Fall einen überwiegenden Grossteil der gesamten Sichtseite des Bauteils ausmacht. Zur Tragschicht 2 hin weist die Lackschicht 1 eine Rückseite 14 auf. Die Sichtseite 13 und die Rückseite 14 sind an ihren jeweiligen Seitenrändern jeweils via eine Stirnseite 15 miteinander verbunden. Die Stirnseite 15, welche insbesondere umlaufend ausgebildet sein kann, ist hier gerundet ausgebildet und schliesst die Lackschicht 1 seitlich nach aussen hin ab. Durch die gerundete Ausbildung der Stirnseite 15 der Lackschicht 1 ergibt sich eine ansprechende ästhetische Ausgestaltung des Bauteils. Des Weiteren können dadurch Schmutzablagerungen am Rand der Lackschicht 1 eher vermieden werden.

Die Tragschicht 2 hat eine zur Lackschicht 1 hin gewandte Vorderseite 20 sowie eine Rückseite 21, welche seitlich via Stirnseiten 22 miteinander verbunden sind.

An der Rückseite 14 der Lackschicht 1 ist unmittelbar angrenzend zur Stirnseite 22 der Tragschicht 2 ein umlaufender opaker Rand 30 vorgesehen. Der Rand 30 dient insbesondere dazu, ein seitliches Austreten von Licht aus dem Bauteil zu verhindern. Durch die gestufte Ausbildung der Vorderseite des Randes 30 greifen die Lackschicht 1 und der Rand 30 gegenseitig ineinander ein, was deren gegenseitige Verbindung verbessert.

Innerhalb der Tragschicht 2 ist eine Leiterplatte 40 mit einem daran angebrachten Leuchtelement 41 angeordnet. Die Leiterplatte 40 sowie das Leuchtelement 41 sind jeweils weitgehend vollständig von der Tragschicht 2 umgeben, so dass ein maximal grosser Anteil des vom Leuchtelement 41 ausgestrahlten Lichts in die einen Lichtleiter bildende Tragschicht 2 eingekoppelt wird.

Das in der Figur 1 gezeigte Bauteil weist eine Vielzahl von Lichtumlenkstrukturen auf, welche dazu ausgebildet sind, das vom zumindest einen Leuchtelement 41 ausgestrahlte Licht gezielt in eine oder mehrere bestimmte Richtungen oder in einen oder mehrere bestimmte Richtungsbereiche umzulenken. Die Lichtumlenkstrukturen sind zum Beispiel in Form von Oberflächenstrukturen 16 an der die Sichtseite 13 bildenden Oberfläche der Lackschicht 1 in Form von lokalen Erhebungen und/oder Vertiefungen ausgebildet.

Weitere Lichtumlenkstrukturen sind als Grenzflächenstrukturen 230 im Bereich der Rückseite 14 der Lackschicht 1 bzw. im Bereich der Vorderseite 20 der Tragschicht 2 ausgebildet. Die Grenzflächenstrukturen 230 werden durch ineinandergreifende lokale Erhebungen und/oder Vertiefungen der Lackschicht 1 sowie der Tragschicht 2 gebildet. Durch das Ineinandergreifen der Lackschicht 1 und der Tragschicht 2 im Bereich der Grenzflächenstrukturen 230 erhöht sich zudem deren gegenseitige Verbindung.

Ausserdem sind Lichtumlenkstrukturen in Form von Volumenstrukturen 231 im Inneren der Tragschicht 2 vorhanden.

Sowohl die Lackschicht 1 als auch die Tragschicht 2 sind transluzent oder transparent ausgebildet. Bei einer transluzenten Ausgestaltung kann eine homogenere Lichtverteilung über die Sichtseite 13 erreicht werden, so dass dahinter angeordnete Elemente, wie beispielsweise die Leiterplatte 40 und/oder die Lichtumlenkstrukturen 230 und 231 nicht erkennbar sind. Eine transparente Ausgestaltung von zum Beispiel der Lackschicht 1 kann hingegen zum Beispiel dann gewünscht sein, wenn im Gegensatz dazu dahinterliegende Elemente erkennbar sein sollen. So können beispielsweise die Volumenstrukturen 231 und/oder die Grenzflächenstrukturen 230 jeweils individuell oder gemeinsam aus Sicht des Betrachters ein Symbol, wie zum Beispiel einen Schriftzug oder einen Markennamen, darstellen. Durch die Anordnung des Symbols unterhalb der transparenten Lackschicht 1 und, im Falle der Volumenstrukturen 231, sogar innerhalb der Tragschicht 2 kann sich ein spezieller optischer Effekt ergeben.

In den Figuren 2a bis 2e sind die unterschiedlichen Verfahrensschritte zur Herstellung des in der Figur 1 gezeigten hinterleuchtbaren Bauteils dargestellt. Dabei werden sowohl die Tragschicht 2 als auch die Lackschicht 1 im Spritzgussverfahren hergestellt.

In Vorbereitung des in der Figur 2a dargestellten ersten Verfahrensschrittes zur Ausbildung der Tragschicht 2, werden die Leiterplatte 40 mit daran angebrachtem Leuchtelement 41 in ein erstes unteres Formteil 51 eines Spritzgusswerkzeuges eingebracht und das Spritzgusswerkzeug anschliessend mittels eines ersten oberen Formteils 50 dicht verschlossen. Es bildet sich dadurch eine erste Kavität 52. Eine sichere Positionierung der Leiterplatte 40 im ersten unteren Formteil 51 kann dabei mittels stift- oder stabförmigen Positionierelementen 400 sichergestellt werden, welche an der Unterseite der Leiterplatte 40 angebracht sind. Die Positionierelemente 400 gewährleisten insbesondere, dass die Leiterplatte 40 beim anschliessenden Einbringen eines fliessfähigen Kunststoffmaterials 520 nicht verschoben wird. Das transparente oder transluzente Kunststoffmaterial 520 wird dabei durch eine Einspritzöffnung 515 hindurch in die erste Kavität 52 eingespritzt. Zur Ausbildung der Grenzflächenstrukturen 230 an der Tragschicht 2 weist das erste obere Formteil 50 an seiner Innenseite entsprechende Oberflächenstrukturen 500 auf.

Sobald die Tragschicht 2 ausreichend ausgehärtet ist, wird sie dem Spritzgusswerkzeug entnommen. Wie in der Figur 2b erkennbar ist, umgibt das Material der Tragschicht 2 die Leiterplatte 40 mit dem daran angebrachten Leuchtelement 41 weitgehend vollständig. Die Leiterplatte 40 sowie das Leuchtelement 41 sind dann somit bereits in der Tragschicht 2 integriert, insbesondere eingebettet. Ebenso sind die Grenzflächenstrukturen 230 bereits an der Vorderseite 20 der Tragschicht 2 ausgebildet.

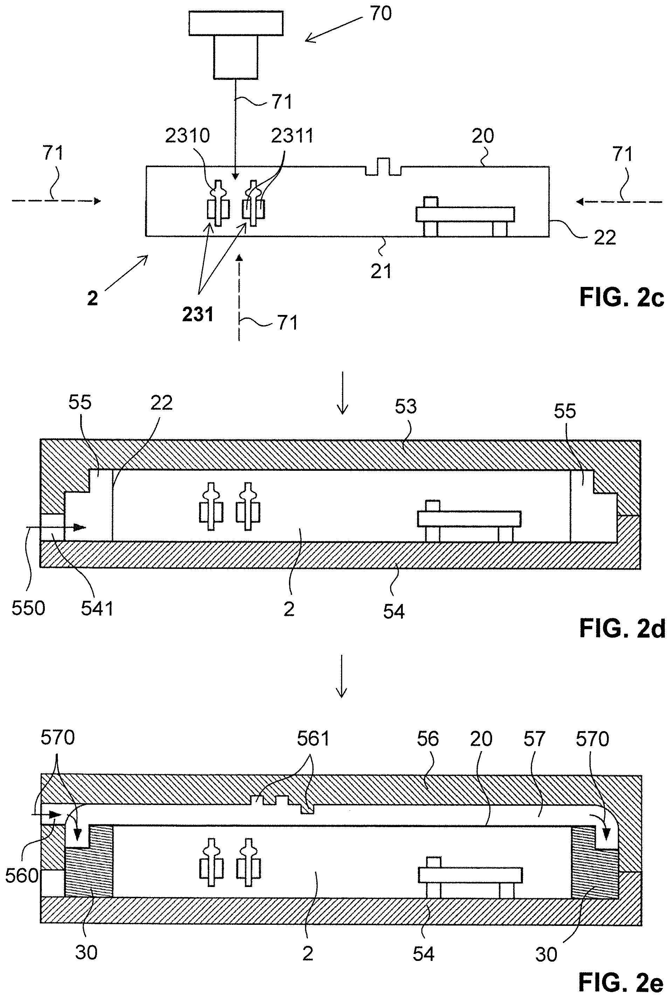

Als nächstes werden dann gemäss Figur 2c die Volumenstrukturen 231 ausgebildet. Hierzu wird die bevorzugt vollständig ausgehärtete Tragschicht 2 mittels eines Laserstrahls 71 beschossen. Beim Laserstrahl 71, welcher von einer Lasereinrichtung 70 erzeugt wird, kann es sich insbesondere um einen fokussierten Laserstrahl handeln. Vorzugweise wird zur Erzeugung des Laserstrahls 71 ein Ultrakurzpulslaser mit einem grünen Laserlicht in einem Wellenlängenbereich von 490 nm - 575 nm, insbesondere von ca. 532 nm, verwendet. Der Einsatz des Laserstrahls 71 bewirkt einen Wärmeeintrag in das Material der Tragschicht 2, wodurch es zu einer lokal eng begrenzten Materialaufschmelzung kommt. Der Wärmeeintrag ist bevorzugt jedoch derart klein, dass keine chemische Materialveränderung, insbesondere keine Karbonisierung, auftritt. Wie es in der Figur 2c gezeigt ist, kann der Laserstrahl 71 via die Vorderseite 20, via die Rückseite 21 oder seitlich via die Stirnseite 22 in die Tragschicht 2 eingebracht werden.

Die vom Laserstrahl 71 erzeugten Volumenstrukturen 231 weisen jeweils bevorzugt einen langgestreckten Grundkörper mit einer oder mehreren daran angebrachten Fahnen 2311 auf. Es sind bevorzugt jeweils eines oder mehrere Paare von diametral einander gegenüberliegend am Grundkörper angeordneten Fahnen 2311 vorhanden, welche sich über 1/3 bis 2/3 der gesamten Längserstreckung des Grundkörpers erstrecken. Die Fahnen weisen jeweils eine Breite, gemessen in eine senkrecht zur Längsachse des Grundkörpers stehende Richtung, von bevorzugt höchstens 30 Mikrometer auf. Der Grundkörper weist entlang seiner Längsrichtung jeweils eine lokale Verdickung 2310 auf, die in Bezug auf die Längsrichtung des Grundkörpers bevorzugt bei 15 - 35 Prozent der gesamten Längserstreckung des Grundkörpers angeordnet ist. Die Volumenstrukturen 231 sind insbesondere entsprechend den Angaben in der WO 2017/174548 A1 ausgebildet und hergestellt.

Es können jeweils eine Vielzahl von Volumenstrukturen 231 auf einer gemeinsamen Ebene in der Tragschicht 2 angeordnet sein. Auch können mehrere Ebenen innerhalb der Tragschicht 2 mit jeweils einer Vielzahl von Volumenstrukturen 231 vorgesehen sein. Eine Vielzahl von Volumenstrukturen 231, wie übrigens auch von Grenzflächenstrukturen 230 und von Oberflächenstrukturen 16, können zudem gemeinsam ein Symbol bilden.

Als nächster Schritt wird der umlaufende Rand 30 hergestellt, was in der Figur 2d gezeigt ist. Hierzu wird die ausgehärtete Tragschicht 2 in ein weiteres Spritzgusswerkzeug eingelegt, welches ein zweites oberes Formteil 53 und ein zweites unteres Formteil 54 aufweist. Durch eine Einspritzöffnung 541 hindurch wird ein opakes, fliessfähiges Kunststoffmaterial 550 in eine durch die beiden Formteile 53 und 54 sowie die Tragschicht 2 begrenzte zweite Kavität 55 eingespritzt. Der Rand 30 wird somit an die Stirnseite 22 der Tragschicht 2 angespritzt.

Nach erfolgter Aushärtung des Randes 30 wird das zweite obere Formteil 53 entfernt und das Spritzgusswerkzeug mit einem dritten oberen Formteil 56 verschlossen. Dieses dritte obere Formteil 56 bildet gemeinsam mit der Tragschicht 2 und dem daran angespritzten Rand 30 eine nach aussen hin dichte dritte Kavität 57, welche insbesondere im Bereich der Vorderseite 20 der Tragschicht 2 vorhanden ist (siehe Figur 2e). Via eine seitliche Einspritzöffnung 560 wird dann ein Lack 570 eingespritzt, der sich auf der Vorderseite 20 der Tragschicht 2 ausbreitet und diese überflutet. Zudem breitet sich der Lack 570 auch über die vordere Aussenkante des Randes 30 hinaus aus. An der Stirnseite des Randes 30 kommt der Lack 570 und somit die spätere Lackschicht 1 bündig zur Aussenfläche des Randes 30 zu liegen. Zur Ausbildung der Oberflächenstruktur 16 ist auf der Innenseite des dritten oberen Formteils 56 eine entsprechende Oberflächenstruktur 561, beispielsweise in Form einer Narbung, ausgebildet.

Nach erfolgter Aushärtung des Lackes 570 wird das Spritzgusswerkzeug geöffnet und das weitgehend fertige Bauteil daraus entnommen. Gegebenenfalls können danach noch gewisse Nachbearbeitungen vorgenommen werden.

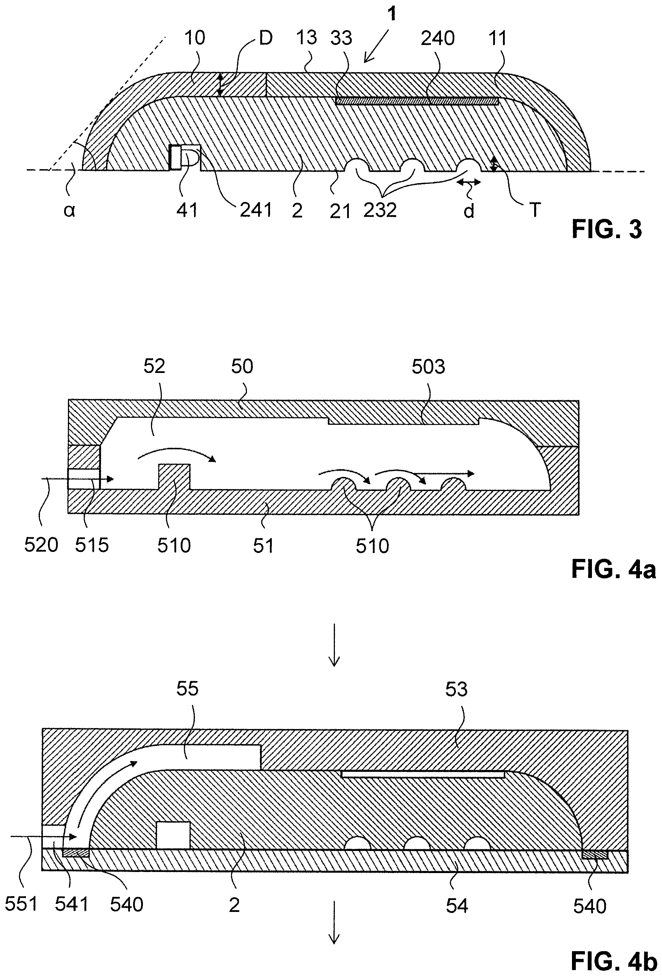

In der Figur 3 ist ein erfindungsgemässes hinterleuchtbares Bauteil gemäss einer zweiten Ausführung gezeigt. Die Herstellung dieses Bauteils ist in den Figuren 4a bis 4d dargestellt.

Im Unterschied zum Bauteil der Figur 1 weist dasjenige der Figur 3 eine Lackschicht 1 mit einem opaken Lackschichtteil 10 und mit einem transparenten Lackschichtteil 11 auf. Anstatt transparent könnte der Lackschichtteil 11 auch transluzent ausgebildet sein. Genauso könnte der opake Lackschichtteil 10 in einer alternativen Ausführungsform transluzent ausgebildet sein. Die Dicke D der Lackschicht 1 ist bevorzugt in einem Bereich von grösser als 25 bis weniger als 100 Mikrometer. Sie kann jedoch durchaus auch eine Dicke D ausserhalb des angegebenen Bereiches aufweisen.

Unterhalb des transparenten Lackschichtteils 11 weist die transparente oder transluzente Tragschicht 2 hier eine erste Vertiefung 240 auf, in welcher eine Folie 33 angeordnet ist. Die Folie 33 kann beispielsweise eingefärbt sein und/oder die Form eines Symbols bilden.

Der Rand der Tragschicht 2 erstreckt sich bei dieser Ausführungsform gerundet nach hinten. Wie aus der Figur 3 zudem gut ersichtlich ist, erstreckt sich die Lackschicht 1 über den gesamten gerundet ausgebildeten Randbereich der Tragschicht 2. Die Sichtseite 13 der Lackschicht 1 bildet dadurch im Randbereich des Bauteils einen Winkel α mit der Fläche, in welcher sich die Rückseite 21 der Tragschicht 2 erstreckt, der sich von aussen nach innen hin stetig von 90° bis 0° verkleinert. In anderen Ausführungsformen könnte der Randbereich des Bauteils, insbesondere im Randbereich der Tragschicht 2 und/oder der Lackschicht 1, gestuft ausgebildet sein.

Im Bereich der Rückseite 21 weist die Tragschicht 2 des in der Figur 3 gezeigten Bauteils eine zweite Vertiefung 241 auf, innerhalb welcher ein Leuchtelement 41 aufgenommen ist.

Ausserdem sind an der Rückseite 21 der Tragschicht 2 der in der Figur 3 gezeigten Ausführungsform Lichtumlenkelemente zur gezielten Lichtumlenkung zum Beispiel in Richtung zur Folie 33 hin in Form von Oberflächenstrukturen 232 vorgesehen. Die Oberflächenstrukturen 232 sind als Vertiefungen ausgebildet und erstrecken sich mit einer Tiefe T in die Tragschicht 2 hinein, die bevorzugt weniger als das Dreifache des Durchmessers d einer jeweiligen Vertiefung beträgt. Die Oberflächenstrukturen 232 sind somit bevorzugt als jeweils halbkugelförmige Vertiefungen ausgebildet.

Zur Herstellung des in der Figur 3 gezeigten Bauteils wird in einem ersten Schritt, entsprechend der Figur 4a mittels eines ersten oberen Formteils 50 und eines ersten unteren Formteils 51 eine erste Kavität 52 gebildet. In diese erste Kavität 52 wird zur Ausbildung der Tragschicht 2 durch eine Einspritzöffnung 515 hindurch ein Kunststoffmaterial 520 eingebracht. Zur Ausbildung der ersten und der zweiten Vertiefung 240, 241 sowie der Oberflächenstrukturen 232 sind am ersten oberen Formteil 50 bzw. am ersten unteren Formteil 51 entsprechend komplementär ausgebildete Erhebungen 503 und 510 vorgesehen.

Nach dem Aushärten und Entformen der Tragschicht 2 wird diese, wie in der Figur 4b gezeigt, zur Herstellung des opaken Lackschichtteils 10 in ein weiteres Spritzgusswerkzeug mit einem zweiten oberen Formteil 53 und einem zweiten unteren Formteil 54 eingelegt. Dichtungen 540 können vorgesehen sein, um die beiden Formteile 53, 54 im Hinblick auf den üblicherweise dünnflüssigen Lack 551 abzudichten. Der opake Lack 551 wird via eine Einspritzöffnung 541 in eine zweite Kavität 55 eingebracht, welche gemeinsam vom zweiten oberen und vom zweiten unteren Formteil 53, 54 sowie der bereits hergestellten Tragschicht 2 begrenzt wird.

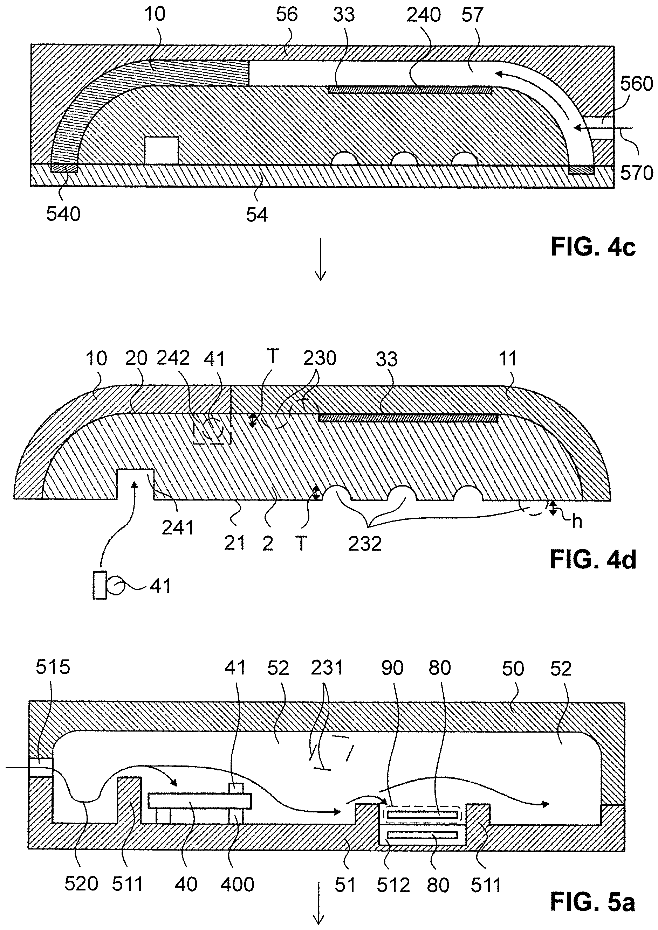

Anschliessend wird nach Aushärtung des opaken Lackes 551 das zweite obere Formteil 53 entfernt, die Folie 33 in die erste Vertiefung 240 der Tragschicht eingelegt sowie das Spritzgusswerkzeug mit einem dritten oberen Formteil 56 erneut verschlossen (Figur 4c). Dadurch bildet sich eine nach aussen hin dichte dritte Kavität 57, in welche ein transparenter Lack 570 via eine Einspritzöffnung 560 zur Ausbildung des transparenten Lackschichtteils 11 eingespritzt wird. Die Folie 33 wird somit zwischen der Tragschicht 2 und der Lackschicht 1 eingebettet.

Nach dem Aushärten des transparenten Lackes 570 wird das Bauteil dem Spritzgusswerkzeug entnommen und gegebenenfalls nachbearbeitet. Dabei wird insbesondere ein Leuchtelement 41 in die zweite Vertiefung 241 der Tragschicht 2 eingesetzt, siehe Figur 4d. Grundsätzlich wäre es auch möglich, ein Leuchtelement 41 alternativ oder zusätzlich in eine dritte Vertiefung 242 einzusetzen, welche zu diesem Zweck im Bereich der Vorderseite 20 der Tragschicht 2 vorgesehen ist (in Figur 4d gestrichelt gezeigt). Das in dieser dritten Vertiefung 242 angeordnete Leuchtelement 41 könnte dann vollständig vom Lack der Lackschicht 1 umspritzt sein. Des Weiteren könnten selbstverständlich auch bei dieser Ausführungsform Grenzflächenstrukturen 230 zur Lichtumlenkung im Bereich zwischen der Lackschicht 1 und der Tragschicht 2 vorgesehen sein (ebenfalls in Figur 4d gestrichelt dargestellt). Die Grenzflächenstrukturen 230 erstrecken sich bevorzugt bis zu einer Tiefe T von 3-500 Mikrometer in die Tragschicht 2 bzw. die Lackschicht 1 hinein. Auch können natürlich Oberflächenstrukturen 232 zur Lichtumlenkung in Form von einer oder mehreren Erhebungen an der Rückseite 21 der Tragschicht 2 vorgesehen sein (ebenfalls gestrichelt gezeigt). Die Erhebungen weisen bevorzugt eine Höhe h von 3-500 Mikrometer gegenüber der umgebenden Oberfläche der Rückseite 21 der Tragschicht 2 auf.

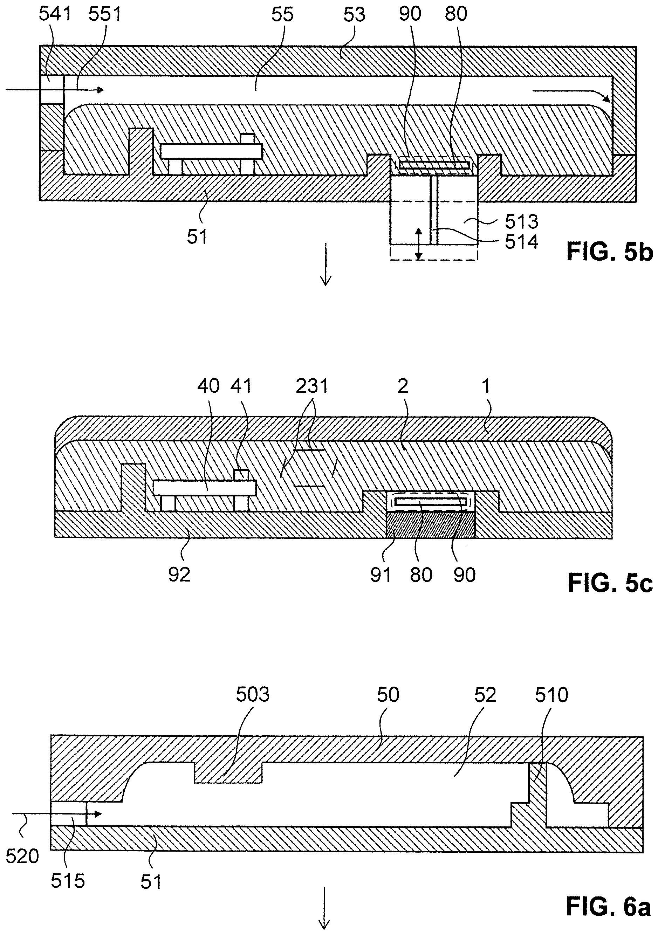

Die Herstellung eines hinterleuchtbaren Bauteils gemäss einer dritten erfindungsgemässen Ausführungsform ist in den Figuren 5a bis 5c dargestellt, wobei die Figur 5c das fertige Bauteil zeigt.

Zur Herstellung der transparenten oder transluzenten Tragschicht 2 entsprechend der Figur 5a wird durch eine Einspritzöffnung 515 ein Kunststoffmaterial 520 in eine erste Kavität 52 eingebracht, die durch ein erstes oberes Formteil 50 und ein erstes unteres Formteil 51 gebildet und abgedichtet wird. Eine Leiterplatte 40 mit daran angebrachtem Leuchtelement 41 wird dabei vom Kunststoffmaterial 520 umspritzt. Um die mechanische Einwirkung des einfliessenden Kunststoffmaterials 520 auf die Leiterplatte 40 zu mindern und ein Verschieben zu verhindern, ist am ersten unteren Formteil 51 eine Schutzerhebung 511 angebracht, welche sich zwischen der Einspritzöffnung 515 und der Leiterplatte 40 in die erste Kavität 52 hinein erstreckt.

Des Weiteren wird bei der in der Figur 5a gezeigten Ausführung ein elektronisches Bauteil, wie beispielsweise ein Sensor 80 in das Kunststoffmaterial 520 der Tragschicht 2 integriert bzw. eingebettet. Der Sensor 80 kann in einer Schutzschicht 90, insbesondere Schutzfolie, eingepackt sein. Um ein Verrutschen des Sensors 80 während des Einspritzvorgangs zu verhindern, ist dieser von einer weiteren Schutzerhebung 511 des ersten unteren Formteils 51 umgeben. Alternativ, um den Sensor 80 noch besser zu schützen, kann dieser in einer Vertiefung 512 des ersten unteren Formteils 51 aufgenommen sein, welche zusätzlich durch eine umlaufende Schutzerhebung 511 geschützt sein kann. In der Figur 5a sind beide alternativen Varianten zur Anordnung des Sensors 80 dargestellt. Im Kunststoffmaterial 520 können Volumenstrukturen 231 zwecks gezielter Lichtumlenkung in der Tragschicht 2 mittels eines Lasers hergestellt werden.

Im nächsten Verfahrensschritt der Figur 5b wird nach dem Aushärten der Tragschicht 2 das erste obere Formteil 50 durch ein zweites oberes Formteil 53 ersetzt, um gemeinsam mit der Tragschicht 2 eine zweite Kavität 55 für die Herstellung der Lackschicht 1 zu bilden und abzudichten. Der transparente oder transluzente Lack 551 wird dann durch eine Einspritzöffnung 541 in die zweite Kavität 55 eingebracht, so dass er die Vorderseite der Tragschicht 2 überflutet.

Eine weitere Möglichkeit, um beim Einspritzen des Kunststoffmaterials 520 in die erste Kavität 52 (Figur 5a) ein Verschieben des Sensors 80 zu verhindern, ist in der Figur 5b gezeigt: Das erste untere Formteil 51 kann einen Vakuumkanal 514 aufweisen, an welchen ein Vakuum derart anlegbar ist, dass der Sensor 80 fixiert wird. Der Vakuumkanal 514 kann zudem durch ein bewegliches Formteilelement 513 des ersten unteren Formteils 51 hindurch verlaufen. Dieses bewegliche Formteilelement 513 kann, wie in der Figur 5b gestrichelt dargestellt, nach erfolgter Aushärtung der Tragschicht 2 ein Stück weit von dieser weg verschoben werden, um z.B. durch den Vakuumkanal 514 hindurch einen Kunststoff einzuspritzen. Der eingespritzte Kunststoff bildet im Bereich der Rückseite der Tragschicht 2 und unmittelbar unterhalb des Sensors 80 eine Kunststoffschicht 91 (siehe Figur 5c). Der Sensor 80 inkl. Schutzschicht 90 muss daher nicht unbedingt vom Material der Tragschicht 2 umspritzt werden, sondern kann auch erst nach der Aushärtung der Tragschicht 2 in eine entsprechend dafür vorgesehene Vertiefung eingelegt werden, welche dann, wie in Figur 5c gezeigt, mit der Kunststoffschicht 91 nach aussen hin verschlossen wird.

Des Weiteren kann eine Kunststoffschutzschicht 92 zum Schutz der Tragschicht 2 an deren Rückseite angebracht, insbesondere angespritzt, werden, wie dies in der Figur 5c gezeigt ist.

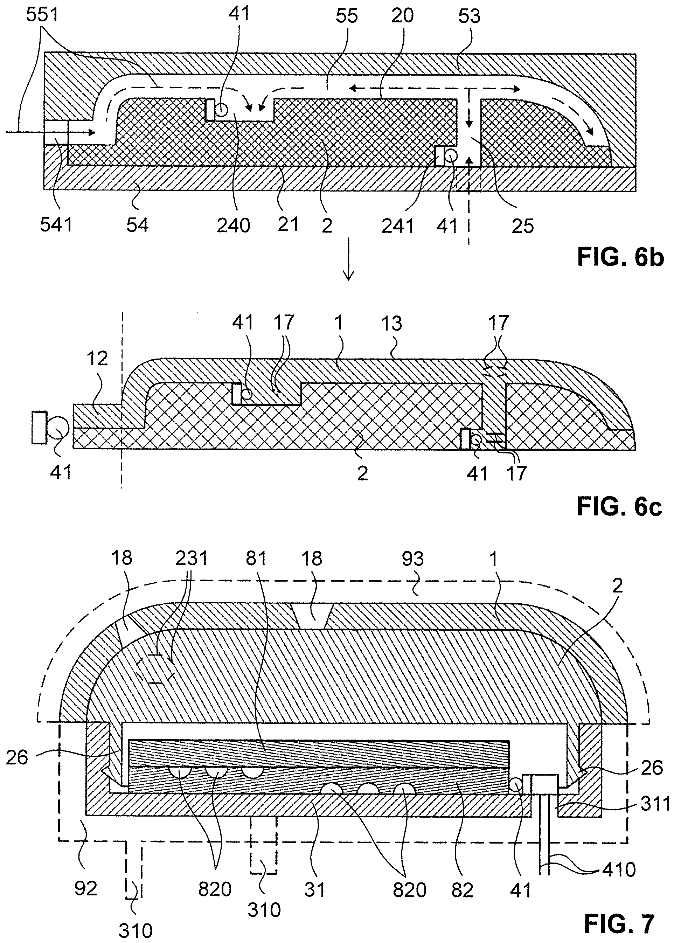

Die Herstellung eines hinterleuchtbaren Bauteils gemäss einer vierten erfindungsgemässen Ausführungsform ist in den Figuren 6a bis 6c dargestellt, wobei die Figur 6c das fertige Bauteil zeigt.

Im Unterschied zu den bisher gezeigten Ausführungsformen wird bei der Herstellung des in den Figuren 6a bis 6c gezeigten Bauteils ein erstes unteres Formteil 51 verwendet, welches eine Erhebung 510 hat, die nach oben durch die erste Kavität 52 bis zur Innenseite des ersten oberen Formteils 50 reicht. Nach dem Einspritzen des transparenten oder transluzenten Kunststoffmaterials 520 durch die Einspritzöffnung 515 hindurch (Figur 6a) und Aushärten des Kunststoffmaterials 520 wird dadurch eine Tragschicht 2 mit einer von der Rückseite 21 bis zur Vorderseite 20 durchgehenden Öffnung erreicht. Diese Öffnung kann anschliessend zum Einspritzen des Lackes 551 als Durchspritzkanal 25 verwendet werden (siehe Figur 6b), um unschöne Anspritzstellen im Bereich der Sichtseite der Lackschicht 1 zu vermeiden. Der die Lackschicht 1 bildende Lack 551 erstreckt sich hier somit von der Vorderseite 20 bis zur Rückseite 21 durch die Tragschicht 2 hindurch.

Auf der Innenseite des ersten oberen Formteils 50 ist, wie in der Figur 6a gezeigt, eine Erhebung 503 vorhanden, um im Bereich der Vorderseite 20 der Tragschicht 2 eine erste Vertiefung 240 zur Aufnahme eines Leuchtelements 41 zu bilden (Figur 6b). Eine zweite Vertiefung 241 zur Aufnahme eines weiteren Leuchtelements 41 weist die Tragschicht 2 unmittelbar angrenzend zum Durchspritzkanal 25 auf. Durch die unmittelbare Anordnung dieses weiteren Leuchtelements 41 neben dem Durchspritzkanal 25, kann Licht direkt in den Lack eingekoppelt und durch den Durchspritzkanal 25 hindurch zur Sichtseite der Lackschicht 1 weitergeleitet werden. Die Tragschicht 2 muss hier somit nicht zwingend transparent oder transluzent ausgebildet sein, sondern könnte durchaus auch opak sein.

Nach dem Entformen des ausgehärteten Bauteils (Figur 6c) kann die Angussstelle 12, welche im Bereich der Einspritzöffnung 541 entstanden ist, abgetrennt werden (gestrichelte Linie), oder aber zum Beispiel zur Anordnung eines noch weiteren Leuchtelement 41 verwendet werden.

Mittels zum Beispiel eines Lasers können nach der Entformung des Bauteils innerhalb der Lackschicht 1 Volumenstrukturen 17 vorgesehen werden, um eine gezielte Lichtumlenkung innerhalb der Lackschicht 1 zur Sichtseite 13 hin zu bewirken. Die Volumenstrukturen 17 können insbesondere in jeweils den Bereichen unmittelbar in der Nähe eines Leuchtelements 41 angeordnet sein. Ebenso können innerhalb des Durchspritzkanals 25 Volumenstrukturen 17 ausgebildet sein.

Eine fünfte erfindungsgemässe Ausführungsform eines hinterleuchtbaren Bauteils ist in der Figur 7 dargestellt, wobei weitere mögliche Varianten mittels gestrichelter Linien illustriert sind.

Die Lackschicht 1 des Bauteils der Figur 7 ist bevorzugt opak ausgebildet und weist mehrere Durchbrüche 18 auf, um Licht von der Tragschicht 2 nach aussen zum Betrachter hin zu lassen. Die Durchbrüche 18 können jeweils allein oder gemeinsam miteinander eines oder mehrere Symbole bilden. Ausserdem können die Durchbrüche 18, wie es in der Figur 7 gezeigt ist, jeweils konisch ausgestaltet sein, wobei sich die vom jeweiligen Durchbruch 18 gebildete Öffnung zur Sichtseite hin aufweiten oder verenge kann.

Im Inneren der transparenten oder transluzenten Tragschicht 2 können optional, zwecks gezielter Lichtumlenkung, Volumenstrukturen 231 vorgesehen sein. Die Volumenstrukturen 231 können insbesondere jeweils direkt unterhalb einem Durchbruch 18 angeordnet sein und dazu diesen, das Licht direkt zu einem der Durchbrüche 18 hin umzulenken.

Die Lackschicht 1 kann von der Herstellung bis zur Verwendung des Bauteils im Endprodukt zum Schutz vor mechanischen und chemischen Einflüssen von einer abziehbaren Schutzfolie 93 abgedeckt sein.

Auf der Rückseite weist die Tragschicht 2 des in der Figur 7 gezeigten Bauteils Halteelemente 26 in Form von sich nach hinten erstreckenden Federhaken auf. Diese Halteelemente 26 dienen zur rückseitigen Befestigung, mittels einer Einschnappverbindung, eines Gehäuses 31 an der Tragschicht 2. Das Gehäuse 31 ist bevorzugt opak ausgebildet.

Durch das Gehäuse 31 und die Tragschicht 2 wird ein Hohlraum begrenzt, in welchem ein Lichtleiter 82, ein Diffusor 81 sowie ein Leuchtelement 41 untergebracht sind. Das Leuchtelement 41 ist unmittelbar seitlich angrenzend zum Lichtleiter 82 angeordnet, so dass das vom Leuchtelement 41 ausgestrahlte Licht direkt in den Lichtleiter 82 eingekoppelt wird. Im Lichtleiter 82 wird das eingekoppelte Licht weitergeleitet und verteilt bis es von Lichtumlenkstrukturen in Form von Oberflächenstrukturen 820 in Richtung zur Sichtseite hin in den direkt am Lichtleiter 82 anliegenden Diffusor 81 hinein ausgekoppelt wird. Im Inneren des Diffusors 81 werden die eingekoppelten Lichtstrahlen mehrfach gestreut und gelangen dann via den erwähnten Hohlraum in die Tragschicht 2. Durch die Streuung im Diffusor 81 wird eine besonders gleichmässige Ausleuchtung des Bauteils erreicht.

Die Stromversorgung des Leuchtelements 41 erfolgt mittels eines Stromversorgungskabels 410, welches durch eine am Gehäuse 31 vorgesehene Kabelöffnung 311 hindurch nach aussen geführt ist.

Um das Bauteil an einer Fahrzeugstruktur, wie beispielsweise am Chassis, anzubringen, können an der Rückseite des Gehäuses 31 eines oder mehrere Befestigungselemente 310 angebracht und insbesondere einstückig mit diesem ausgebildet sein. Alternativ oder zusätzlich dazu kann an die Aussenseite des Gehäuses 31 eine Kunststoffschutzschicht 92 angespritzt sein, welche insbesondere als Abdichtung des Bauteils nach aussen hin dienen kann. Eines oder mehrere Befestigungselemente 310 können auch an der Kunststoffschutzschicht 92 angebracht und insbesondere einstückig mit dieser ausgebildet sein.

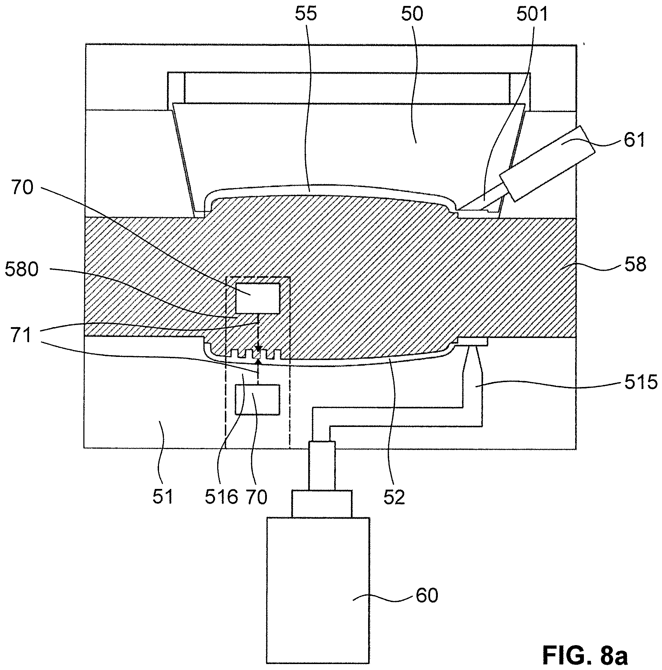

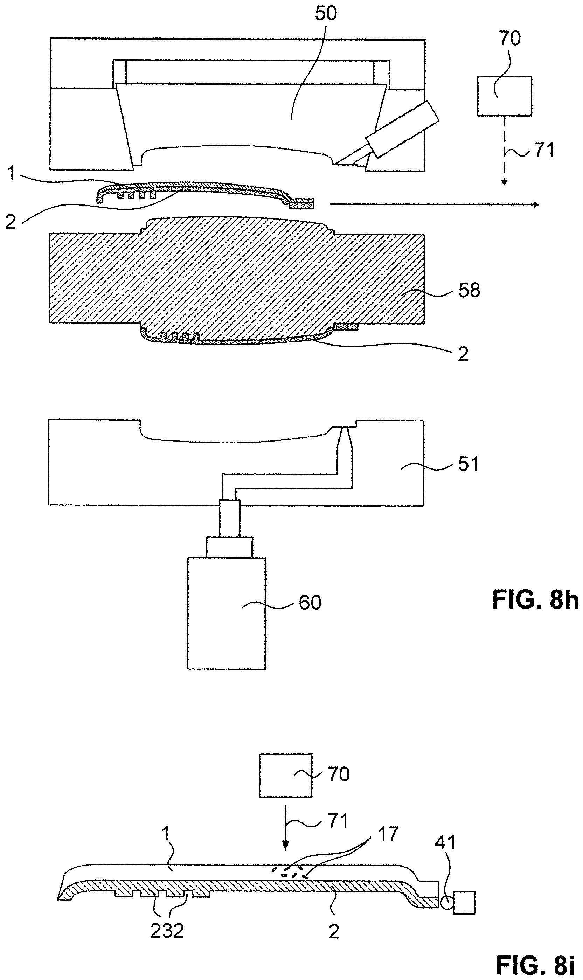

In den Figuren 8a bis 8i ist ein besonders bevorzugtes Verfahren zur Herstellung eines erfindungsgemässen Bauteils gezeigt. Das Bauteil, welchem mit dem in den Figuren 8a bis 8i gezeigten Verfahren hergestellt wird, kann zum Beispiel wie das in der Figur 8i gezeigte Bauteil ausgestaltet sein. Grundsätzlich ist das in den Figuren 8a bis 8i gezeigte Herstellverfahren aber auch zur Herstellung von sämtlichen in den Figuren 1 bis 7 gezeigten Bauteilen anwendbar.

Das Spritzgusswerkzeug, welches bei dem in den Figuren 8a bis 8i gezeigten Herstellverfahren verwendet wird, weist ein erstes oberes Formteil 50, ein erstes unteres Formteil 51 sowie einen dazwischen angeordneten Wendekern 58 auf. Die gesamte Herstellung des Bauteils kann somit mit diesen drei Elementen des Spritzgusswerkzeugs bewerkstelligt werden. Es ist insbesondere kein Austausch des ersten oberen Formteils 50 mit einem weiteren oberen Formteil oder des ersten unteren Formteils 51 mit einem weiteren unteren Formteil oder des Wendekerns 58 mit einem weiteren Wendekern erforderlich.

Während zwischen dem ersten unteren Formteil 51 und dem Wendekern 58 eine erste Kavität 52 gebildet wird, begrenzen das erste obere Formteil 50 und der Wendekern 58 gemeinsam eine zweite Kavität 55, welche im leeren Zustand im Vergleich zur ersten Kavität 51 etwas voluminöser ist. Die Figur 8a zeigt den Ausgangszustand nach dem Schliessen des Spritzgusswerkzeugs.

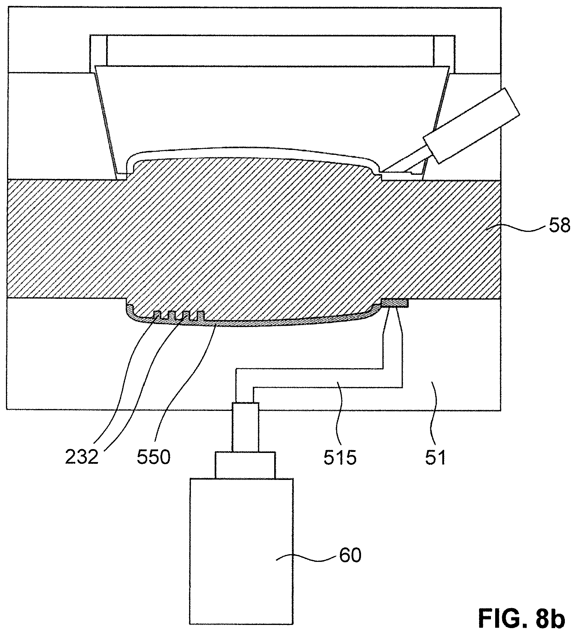

Nach dem Schliessen der ersten Kavität 52 wird, wie es in der Figur 8b gezeigt ist, zur Ausbildung der Tragschicht 2 (Figur 8i) mittels einer ersten Einspritzvorrichtung 60 ein transparentes oder transluzentes Kunststoffmaterial 550 via eine Einspritzöffnung 515 seitlich in die erste Kavität 52 eingespritzt. Die Einspritzöffnung 515 erstreckt sich durch das untere Formteil 51 hindurch.

Mittels entsprechend vorgesehener Strukturen am ersten unteren Formteil 51 oder, wie in der Figur 8b gezeigt, am Wendekern 58 können bei der Herstellung der Tragschicht 2 Lichtumlenkstrukturen in Form von Oberflächenstrukturen 232 erzeugt werden. Alternativ oder zusätzlich dazu können das erste untere Formteil 51 und/oder der Wendekern 58 einen transparenten Bereich 516 bzw. 580 aufweisen (siehe Figur 8a), innerhalb welchem eine Lasereinrichtung 70 angeordnet ist, um mit jeweils einem Laserstrahl 71 Lichtumlenkstrukturen im Inneren oder an einer der Oberflächen der Tragschicht 2 zu erzeugen. Die Lichtumlenkstrukturen können bei einer derartigen Anordnung der Lasereinrichtung 70 wahlweise erzeugt werden, bereits bevor das Kunststoffmaterial in der ersten Kavität 51 vollständig ausgehärtet ist oder erst danach.

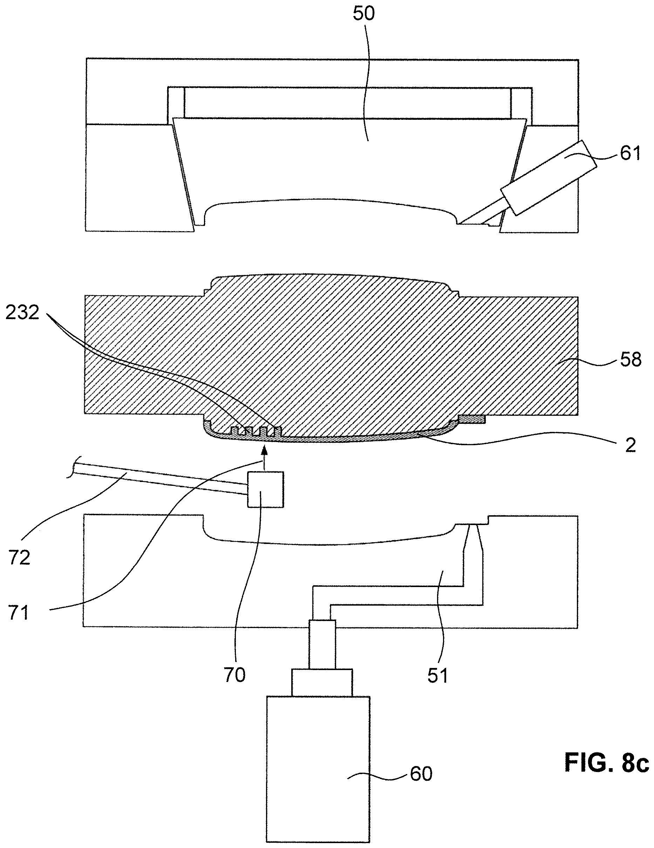

Nach dem Aushärten der Tragschicht 2 werden das erste obere Formteil 50 sowie das untere Formteil 51, wie es in der Figur 8c gezeigt ist, vom Wendekern 58 entfernt. Die Tragschicht 2 verbleibt dabei am Wendekern 58, was insbesondere durch eine geringfügige Schrumpfung der Tragschicht 2 während des Aushärtevorgangs begünstigt sein kann.

Nach dem Entfernen des unteren Formteils 51 vom Wendekern 58 können optional mittels einer an einem Roboterarm 72 gehaltene Lasereinrichtung 70 weitere Lichtumlenkstrukturen im Inneren oder an einer der Oberflächen der Tragschicht 2 erzeugt werden. Die Lasereinrichtung 70 kann dazu vom Roboterarm 72 in den Raum zwischen dem unteren Formteil 51 und dem Wendekern 58 eingefahren werden.

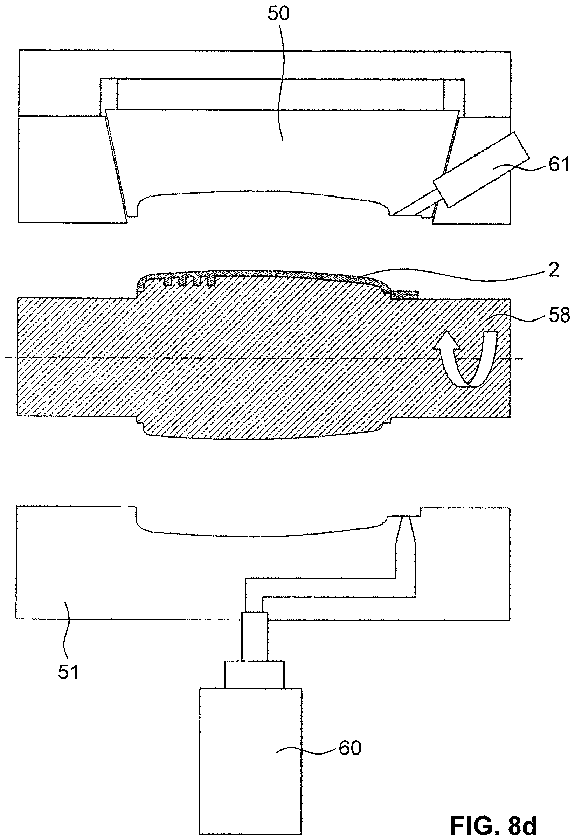

Als nächster Schritt wird der Wendekern 58 um 180° gedreht, wie es in der Figur 8d mit einem Pfeil anzeigt ist. Die Tragschicht 2 wird zusammen mit dem Wendekern 58 somit soweit gedreht, dass sie direkt dem ersten oberen Formteil 50 zugewandt ist.

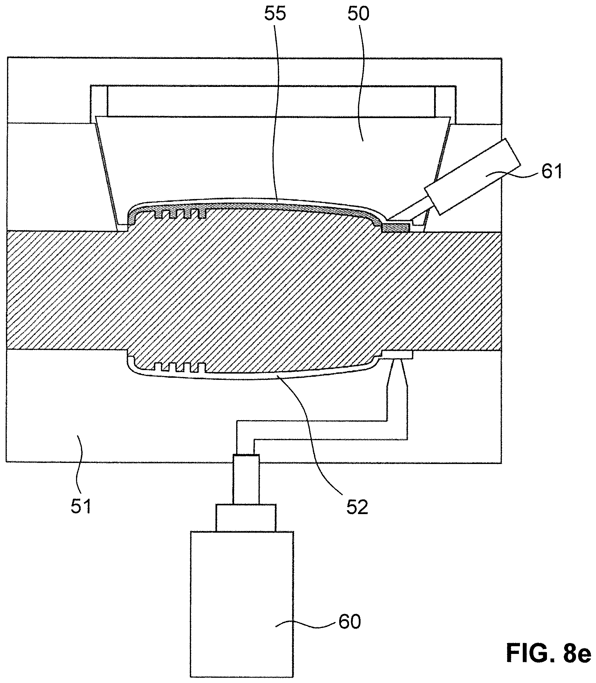

Das Spritzgusswerkzeug wird dann, wie in der Figur 8e gezeigt, wieder verschlossen, indem das erste obere Formteil 50 und das erste untere Formteil 51 bis zur Anlage an den Wendekern 58 heranbewegt werden. Zwischen dem unteren Formteil 51 und dem Wendekern 58 bildet sich dadurch erneut eine erste Kavität 52, welche zwecks Herstellung der Tragschicht 2 eines weiteren Bauteils mit einem Kunststoffmaterial befüllbar ist. Zwischen dem ersten oberen Formteil 50 und dem Wendekern 58 oder, genauer gesagt, der Tragschicht 2 bildet sich eine zweite Kavität 55 im Bereich der Vorderseite der Tragschicht 2.

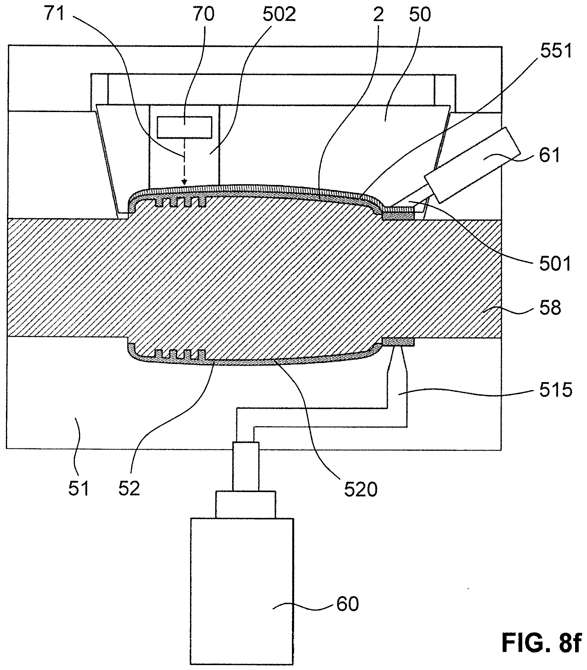

Zur Ausbildung einer Lackschicht 1 (siehe Figur 8i) wird nun, wie es in der Figur 8f gezeigt ist, mittels einer zweiten Einspritzvorrichtung 61 durch eine Durchspritzöffnung 501 hindurch ein transparenter oder transluzenter Lack 551 in die zweite Kavität 55 eingespritzt. Die Vorderseite der Tragschicht 2 wird dabei vom Lack 551 überflutet. Die Durchspritzöffnung 501 erstreckt sich durch das erste obere Formteil 50 hindurch.

Bereits während des Aushärtevorgangs des Lacks 551 und/oder danach können mittels einer Lasereinrichtung 70 Lichtumlenkstrukturen im Inneren oder an der Oberfläche des Lackes 551 erzeugt werden. Das erste obere Formteil 50 kann hierzu einen transparenten Bereich 502 aufweisen, innerhalb welchem die Lasereinrichtung 70 angeordnet ist. Alternativ oder zusätzlich können mittels der in der Figur 8f gezeigten Lasereinrichtung 70 aber auch Lichtumlenkstrukturen durch den Lack 551 hindurch im Inneren der Tragschicht 2 und/oder an einer ihrer Oberflächen erzeugt werden. Auf diese Weisen könnten zum Beispiel während der Herstellung der Lackschicht 1 Lichtumlenkstrukturen in der Tragschicht 2 hergestellt werden.

Gleichzeitig wie die Lackschicht 1 kann in dem in der Figur 8f gezeigten Verfahrensschritt in der ersten Kavität 52 die Tragschicht 2 eines weiteren Bauteils hergestellt werden, indem via die Einspritzöffnung 515 ein Kunststoffmaterial in die erste Kavität 52 eingespritzt wird. Auf diese Weise kann in parallelen Prozessen eine Vielzahl von Bauteilen auf eine sehr effiziente Art und Weise herstellt werden.

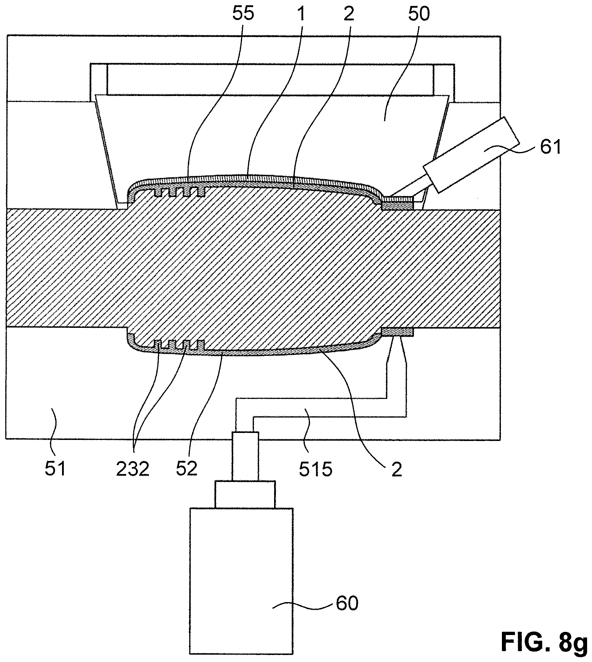

Das Aushärten der in der ersten Kavität 52 hergestellten Tragschicht 2 sowie der in der zweiten Kavität 55 hergestellten Lackschicht 1 kann dann gleichzeitig erfolgen (Figur 8g).

Nachdem die Tragschicht 2 und die Lackschicht 1 ausgehärtet sind, wird das Spritzgusswerkzeug geöffnet (Figur 8h) und das zwischen dem ersten oberen Formteil 50 und dem Wendekern 58 angeordnete Bauteil entformt. Nach der Entnahme des Bauteils aus dem Spritzgusswerkzeug kann dieses mittels einer Lasereinrichtung 70 mit einem Laserstrahl 71 zwecks Ausbildung von weiteren Lichtumlenkstrukturen in der Tragschicht 2 und/oder in der Lackschicht 1 bestrahlt werden.

Das fertige Bauteil ist schliesslich in der Figur 8i gezeigt. Es weist eine Tragschicht 2 mit einer rückseitig angeordneten Lichtumlenkstruktur in Form einer Oberflächenstruktur 232 auf. Die gesamte Vorderseite der Tragschicht 2 wird hier von einer Lackschicht 1 bedeckt. Seitlich zur Tragschicht 2 ist ein Leuchtelement 41 angeordnet, um Lichtstrahlen in die Tragschicht 2 einzukoppeln. Die Lichtstrahlen gelangen durch die Tragschicht 2 hindurch in die Lackschicht 1 und von dort zum Betrachter. Zur gezielten Lichtumlenkung können im Inneren der Lackschicht 1 mittels einer Lasereinrichtung 70 und einem Laserstrahl 71 weitere Lichtumlenkstrukturen in Form von Volumenstrukturen 17 hergestellt werden können. Die Oberflächenstruktur 232 und/oder die Volumenstrukturen 17 können gemeinsam oder individuell Symbole bilden.

Die vorliegende Erfindung ist selbstverständlich nicht auf die vorstehend erläuterten Ausführungsbeispiele begrenzt, sondern eine Vielzahl von Abwandlungen ist möglich. So sind die unterschiedlichen, bzgl. der Figuren 1 bis 8i erläuterten Elemente der verschiedenen Ausführungsbeispiele zum Beispiel austauschbar oder ersetzbar. Viele der Merkmale dieser Ausführungsbeispiele können sogar ganz entfallen. Beispielsweise muss die Tragschicht 2 nicht zwingend im Spritzgussverfahren hergestellt sein, sondern es könnte zum Beispiel auch ein vorkonfektioniertes Element verwendet werden. Anstelle des Wendekerns 58 könnte bei dem in den Figuren 8a bis 8i dargestellten Verfahren auch eine Schiebetisch- oder Dreheinheit verwendet werden, um die Effizienz in der Bauteilherstellung zu steigern. Die Lichtumlenkstrukturen können auch mittels anderer als den angegebenen Verfahren hergestellt werden, wie zum Beispiel mittels eines Prägeverfahrens. Zudem können neben den Lichtumlenkstrukturen, welche zur gezielten Lichtumlenkung dienen, auch solche vorhanden sein, welche das Licht ungezielt umlenken, zum Beispiel zwecks einer Diffusorwirkung. Eine Vielzahl weiterer Abwandlungen ist möglich.

### BEZUGSZEICHENLISTE

| | | | |
|---|---|---|---|
| 1 | Lackschicht | 242 | Dritte Vertiefung |
| 10 | Opaker Lackschichtteil | 25 | Durchspritzkanal |
| 11 | Transparenter Lackschichtteil | 26 | Halteelement |
| 12 | Angussstelle | | |
| 13 | Sichtseite | 30 | Rand |
| 14 | Rückseite | 31 | Gehäuse |
| 15 | Stirnseite | 310 | Befestigungselement |
| 16 | Oberflächenstruktur | 311 | Kabelöffnung |
| 17 | Volumenstruktur | 32 | Haftvermittler |
| 18 | Durchbruch | 33 | Folie |
| 2 | Tragschicht | 40 | Leiterplatte |
| 20 | Vorderseite | 400 | Positionierelement |
| 21 | Rückseite | 41 | Leuchtelement |
| 22 | Stirnseite | 410 | Stromversorgungskabel |
| 230 | Grenzflächenstruktur | | |
| 231 | Volumenstruktur | 50 | Erstes oberes Formteil |
| 2310 | Verdickung | 500 | Oberflächenstruktur |
| 2311 | Fahne | 501 | Durchspritzöffnung |
| 232 | Oberflächenstruktur | 502 | Transparenter Bereich |
| 240 | Erste Vertiefung | 503 | Erhebung |
| 241 | Zweite Vertiefung | 51 | Erstes unteres Formteil |
| 510 | Erhebung | 580 | Transparenter Bereich |
| 511 | Schutzerhebung | | |
| 512 | Vertiefung | 60 | Erste Einspritzvorrichtung |
| 513 | Bewegliches Formteilelement | 61 | Zweite Einspritzvorrichtung |
| 514 | Vakuumkanal | | |
| 515 | Einspritzöffnung | 70 | Lasereinrichtung |
| 516 | Transparenter Bereich | 71 | Laserstrahl |
| 52 | Erste Kavität | 72 | Roboterarm |
| 520 | Kunststoffmaterial | | |
| | | 80 | Sensor |
| 53 | Zweites oberes Formteil | 81 | Diffusor |
| 54 | Zweites unteres Formteil | 82 | Lichtleiter |
| 540 | Dichtung | 820 | Oberflächenstruktur |
| 541 | Einspritzöffnung | | |
| 55 | Zweite Kavität | 90 | Schutzschicht |
| 550 | Kunststoffmaterial | 91 | Kunststoffschicht |
| 551 | Lack | 92 | Kunststoffschutzschicht |
| | | 93 | Schutzfolie |
| 56 | Drittes oberes Formteil | | |
| 560 | Einspritzöffnung | α | Winkel |
| 561 | Oberflächenstruktur | D | Dicke |
| 57 | Dritte Kavität | T | Tiefe |
| 570 | Lack | d | Durchmesser |
| | | h | Höhe |
| 58 | Wendekern | | |

## Patentansprüche

1. Hinterleuchtbares Bauteil, aufweisend
eine Tragschicht (2);
eine an der Tragschicht (2) angebrachte Lackschicht (1), welche wenigstens bereichsweise transluzent oder transparent ausgebildet ist, und welche wenigstens bereichsweise eine Sichtseite (13) des Bauteils bildet;
zumindest ein Leuchtelement (41) zum Hinterleuchten des Bauteils; sowie
eine oder mehrere Lichtumlenkstrukturen (16, 17, 230, 231, 232),
wobei die eine oder die mehreren Lichtumlenkstrukturen (16, 17, 230, 231, 232) dazu ausgebildet sind, das vom zumindest einen Leuchtelement (41) ausgestrahlte Licht gezielt in eine oder mehrere bestimmte Richtungen oder in einen oder mehrere bestimmte Richtungsbereiche zur Sichtseite (13) hin umzulenken,
**dadurch gekennzeichnet, dass**
die eine oder die mehreren Lichtumlenkstrukturen (16, 17, 230, 231, 232) im Bereich der Tragschicht (2) angeordnet sind, und dass die Tragschicht (2) wenigstens bereichsweise transluzent oder transparent ausgebildet ist.

2. Hinterleuchtbares Bauteil nach Anspruch 1, wobei sich die Brechungsindizes der Tragschicht (2) und der Lackschicht (1) um mindestens 0.001 bis maximal 0.3 unterscheiden.

3. Hinterleuchtbares Bauteil nach Anspruch 1 oder 2, wobei die Lackschicht (1) wenigstens bereichsweise opak ausgebildet ist.

4. Hinterleuchtbares Bauteil nach einem der vorhergehenden Ansprüche, wobei die Lackschicht (1) und/oder die Tragschicht (2) und/oder die eine oder die mehreren Lichtumlenkstrukturen (16, 17, 230, 231, 232), von der Sichtseite (13) her gesehen, eines oder mehrere Symbole bildet.

5. Hinterleuchtbares Bauteil nach einem der vorhergehenden Ansprüche, wobei sowohl die Tragschicht (2) als auch die Lackschicht (1) im Spritzgussverfahren hergestellt sind.

6. Hinterleuchtbares Bauteil nach einem der vorhergehenden Ansprüche, wobei die Lackschicht (1) unmittelbar an der Tragschicht (2) angebracht, insbesondere angespritzt ist.

7. Hinterleuchtbares Bauteil nach einem der vorhergehenden Ansprüche, wobei die Tragschicht (2) eine zur Sichtseite (13) hin gewandte Vorderseite (20) aufweist, die von der Lackschicht (1) zu zumindest 20 Prozent, bevorzugt zu zumindest 50 Prozent, am bevorzugtesten zu zumindest 95 Prozent, bedeckt wird.

8. Hinterleuchtbares Bauteil nach einem der vorhergehenden Ansprüche, welches einen opak ausgebildeten Rand (30) aufweist.

9. Hinterleuchtbares Bauteil nach einem der vorhergehenden Ansprüche, wobei die Tragschicht (2) Verstärkungsfasern aufweist, welche bevorzugt lichtleitend ausgebildet sind.

10. Hinterleuchtbares Bauteil nach einem der vorhergehenden Ansprüche, wobei die eine oder die mehreren Lichtumlenkstrukturen (17, 231) innerhalb des transluzent oder transparent ausgebildeten Bereiches der Tragschicht (2) und/oder der Lackschicht (1) angeordnet sind.

11. Hinterleuchtbares Bauteil nach einem der vorhergehenden Ansprüche, wobei die eine oder die mehreren Lichtumlenkstrukturen (16, 230, 232) an einer Oberfläche (13, 14, 20, 21) der Lackschicht (1) und/oder der Tragschicht (2) angeordnet sind.

12. Hinterleuchtbares Bauteil nach einem der vorhergehenden Ansprüche, ausserdem aufweisend ein Zusatzteil, wie insbesondere eine Folie (33) oder ein elektronisches Bauelement (40, 41, 80), das innerhalb der Lackschicht (1) oder der Tragschicht (2) oder zwischen der Lackschicht (1) und der Tragschicht (2) angeordnet und bevorzugt wenigstens teilweise, insbesondere vollständig, vom Material der Tragschicht (2) oder der Lackschicht (1) umspritzt ist.

13. Verfahren zur Herstellung eines Bauteils nach einem der vorhergehenden Ansprüche, aufweisend zumindest die Schritte:
- Anbringen einer Lackschicht (1) an einer Tragschicht (2), um zumindest bereichsweise eine Sichtseite (13) des Bauteils zu bilden;
- Vorsehen von zumindest einem Leuchtelement (41) zum Hinterleuchten des Bauteils; sowie
- Vorsehen von einer oder mehreren Lichtumlenkstrukturen (16, 17, 230, 231, 232) im Bereich der Tragschicht (2), um das vom zumindest einen Leuchtelement (41) ausgestrahlte Licht gezielt in eine oder mehrere bestimmte Richtungen oder in einen oder mehrere bestimmte Richtungsbereiche zur Sichtseite hin (13) umzulenken,
wobei die Lackschicht (1) und die Tragschicht (2) wenigstens bereichsweise transluzent oder transparent ausgebildet sind.

14. Verfahren nach Anspruch 13, wobei die eine oder die mehreren Lichtumlenkstrukturen (16, 230, 232) mittels eines Lasers (70) oder im Spritzgussverfahren gemeinsam mit der Tragschicht (2) oder der Lackschicht (1) hergestellt werden.

## Claims

1. A backlightable component, comprising
a support layer (2);
a lacquer layer (1) attached to the support layer (2), which is translucent or transparent at least in some areas, and which forms a visible side (13) of the component at least in some areas;
at least one lighting element (41) for backlighting the component; and
one or more light deflection structures (16, 17, 230, 231, 232),
wherein the one or more light deflection structures (16, 17, 230, 231, 232) are adapted to deflect the light emitted by the at least one lighting element (41) in a targeted manner in one or more specific directions or in one or more specific directional regions towards the visible side (13),
**characterized in that**
the one or more light deflection structures (16, 17, 230, 231, 232) are arranged in the region of the support layer (2), and **in that** the support layer (2) is at least partially translucent or transparent.

2. The backlightable component according to claim 1, wherein the refractive indices of the support layer (2) and the lacquer layer (1) differ by at least 0.001 to at most 0.3.

3. The backlightable component according to claim 1 or 2, wherein the lacquer layer (1) is opaque at least in some areas.

4. The backlightable component according to any one of the preceding claims, wherein the lacquer layer (1) and/or the support layer (2) and/or the one or more light deflection structures (16, 17, 230, 231, 232), as seen from the visible side (13), form one or more symbols.

5. The backlightable component according to any one of the preceding claims, wherein both the support layer (2) and the lacquer layer (1) are produced by injection molding.

6. The backlightable component according to any one of the preceding claims, wherein the lacquer layer (1) is attached directly to the support layer (2), in particular is sprayed on.

7. The backlightable component according to any one of the preceding claims, wherein the support layer (2) has a front side (20) facing the visible side (13), which is covered by the lacquer layer (1) by at least 20 percent, preferably by at least 50 percent, most preferably by at least 95 percent.

8. The backlightable component according to any one of the preceding claims, which has an opaque edge (30).

9. The backlightable component according to any one of the preceding claims, wherein the support layer (2) comprises reinforcing fibers which are preferably designed to be light-conducting.

10. The backlightable component according to one of the preceding claims, wherein the one or more light deflection structures (17, 231) are arranged within the translucent or transparent area of the support layer (2) and/or the lacquer layer (1).

11. The backlightable component according to any one of the preceding claims, wherein the one or more light deflection structures (16, 230, 232) are arranged on a surface (13, 14, 20, 21) of the lacqer layer (1) and/or the support layer (2).

12. The backlightable component according to any one of the preceding claims, further comprising an additional part, such as in particular a foil (33) or an electronic component (40, 41, 80), which is arranged within the lacquer layer (1) or the support layer (2) or between the lacquer layer (1) and the support layer (2) and is preferably at least partially, in particular completely, overmolded by the material of the support layer (2) or the lacquer layer (1).

13. A method for producing a component according to any one of the preceding claims, comprising at least the steps of:
- application of a lacquer layer (1) to a support layer (2) to form a visible side (13) of the component, at least in some areas;
- provision of at least one lighting element (41) for backlighting the component; and
- provision of one or more light-deflection structures (16, 17, 230, 231, 232) in the region of the support layer (2) in order to deflect the light emitted by the at least one lighting element (41) in a targeted manner in one or more specific directions or in one or more specific directional regions towards the visible side (13),
wherein the lacquer layer (1) and the support layer (2) are at least partially translucent or transparent.

14. The method according to claim 13, wherein the one or more light deflection structures (16, 230, 232) are produced by means of a laser (70) or by injection molding together with the support layer (2) or the lacquer layer (1).

## Revendications

1. Un composant rétroéclairé, comprenant
une couche de support (2) ;
une couche de laque (1) posée sur la couche de support (2), qui est réalisée au moins partiellement de manière translucide ou transparente, et qui forme au moins partiellement une face visible (13) du composant ;
au moins un élément d'éclairage (41) pour rétro-éclairer le composant ; ainsi que
une ou plusieurs structures de déflexion de la lumière (16, 17, 230, 231, 232),
dans lequel l'une ou plusieurs structures de déflexion de la lumière (16, 17, 230, 231, 232) sont réalisées pour rediriger la lumière émise par l'au moins un élément d'éclairage (41) de manière ciblée dans une ou plusieurs directions spécifiques ou dans une ou plusieurs zones directionnelles spécifiques, vers la face visible (13),
**caractérisé en ce que**
l'une ou plusieurs structures de déflexion de la lumière (16, 17, 230, 231, 232) sont disposées dans la zone de la couche de support (2), et que la couche de support (2) est réalisée au moins partiellement de manière translucide ou transparente.

2. Le composant rétroéclairé selon la revendication 1, dans lequel les indices de réfraction de la couche de support (2) et de la couche de laque (1) diffèrent d'au moins 0,001 jusqu'à un maximum de 0,3.

3. Le composant rétroéclairé selon la revendication 1 ou 2, dans lequel la couche de laque (1) est réalisée de manière au moins partiellement opaque.

4. Le composant rétroéclairé selon l'une des revendications précédentes, dans lequel la couche de laque (1) et/ou la couche de support (2) et/ou la ou les structures de déflexion de la lumière (16, 17, 230, 231, 232), vues depuis la face visible (13), forment un ou plusieurs symboles.

5. Le composant rétroéclairé selon l'une des revendications précédentes, dans lequel la couche de support (2) ainsi que la couche de laque (1) sont fabriquées par moulage par injection.

6. Le composant rétroéclairé selon l'une des revendications précédentes, dans lequel la couche de laque (1) est posée directement sur la couche de support (2), notamment par injection.

7. Le composant rétroéclairé selon l'une des revendications précédentes, dans lequel la couche de support (2) présente une face avant (20) tournée vers la face visible (13), qui est recouverte par la couche de laque (1) à au moins 20 pour cent, de préférence à au moins 50 pour cent, de préférence à au moins 95 pour cent.

8. Le composant rétroéclairé selon l'une des revendications précédentes, lequel présente un bord opaque (30).

9. Le composant rétroéclairé selon l'une des revendications précédentes, dans lequel la couche de support (2) comporte des fibres de renforcement, qui sont de préférence réalisées de manière à conduire la lumière.

10. Le composant rétroéclairé selon l'une des revendications précédentes, dans lequel la ou les structures de déflexion de la lumière (17, 231) sont disposées dans la zone réalisée de manière translucide ou transparente de la couche de support (2) et/ou de la couche de laque (1).

11. Le composant rétroéclairé selon l'une des revendications précédentes, dans lequel la ou les structures de déflexion de la lumière (16, 230, 232) sont disposées sur une surface (13, 14, 20, 21) de la couche de laque (1) et/ou sur la couche de support (2).

12. Le composant rétroéclairé selon l'une des revendications précédentes, comprenant en outre une partie supplémentaire, telle que notamment un film (33) ou un composant électronique (40, 41, 80), qui se trouve à l'intérieur de la couche de laque (1) ou de la couche de support (2) ou entre la couche de laque (1) et la couche de support (2), et qui est de préférence au moins partiellement, en particulier complètement, encapsulé par le matériau de la couche de support (2) ou de la couche de laque (1).

13. Un procédé de fabrication d'un composant selon l'une des revendications précédentes, comprenant au moins les étapes :
- poser une couche de laque (1) sur une couche de support (2) afin de former une face visible (13) du composant au moins par endroits ;
- prévoir au moins un élément d'éclairage (41) pour rétroéclairer le composant; ainsi que
- prévoir une ou plusieurs structures de déflexion de la lumière (16, 17, 230, 231, 232) au niveau de la couche de support (2) afin de rediriger la lumière émise par l'au moins un élément d'éclairage (41) de manière ciblée dans une ou plusieurs directions spécifiques ou dans une ou plusieurs zones directionnelles spécifiques, vers la face visible (13), dans lequel la couche de laque (1) et/ou la couche de support (2) est réalisée de manière au moins partiellement translucide ou transparente.

14. Le procédé selon la revendication 13, dans lequel la ou les structures de déflexion de la lumière (16, 230, 232) sont produites ensemble avec la couche de support (2) ou la couche de laque (1) au moyen d'un laser (70) ou par moulage par injection.
